(19) **Europäisches Patentamt**
**European Patent Office**
**Office européen des brevets**

(11) **EP 4 475 476 A1**

(12) **EUROPEAN PATENT APPLICATION**
published in accordance with Art. 153(4) EPC

(43) Date of publication:
**11.12.2024   Bulletin 2024/50**

(51) International Patent Classification (IPC):
**H04L 5/16** (2006.01)

(21) Application number: **23749861.3**

(22) Date of filing: **03.02.2023**

(52) Cooperative Patent Classification (CPC):
**G09G 5/006; G09G 2370/12; G09G 2380/10**

(86) International application number:
**PCT/JP2023/003566**

(87) International publication number:
**WO 2023/149545 (10.08.2023 Gazette 2023/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.02.2022   US 202263306633 P
14.07.2022   US 202263389108 P
24.01.2023   US 202318100831**

(71) Applicant: **Sony Semiconductor Solutions
Corporation
Atsugi-shi, Kanagawa 243-0014 (JP)**

(72) Inventors:
• **HYAKUDAI Toshihisa**
**Paramus, New Jersey 07652 (US)**
• **OTA Satoshi**
**Atsugi-shi, Kanagawa 243-0014 (JP)**
• **YAMADA Junya**
**Atsugi-shi, Kanagawa 243-0014 (JP)**

(74) Representative: **MFG Patentanwälte
Meyer-Wildhagen Meggle-Freund
Gerhard PartG mbB
Amalienstraße 62
80799 München (DE)**

(54) **COMMUNICATION DEVICE AND COMMUNICATION SYSTEM**

(57)      An HDMI signal can be transmitted and received in a high-speed serial communication method different from the HDMI.

A communication device includes an encoder that generates a packet of a time division duplex (TDD) communication method including a high-definition multimedia interface (HDMI) signal, and a communication unit that transmits the packet to the communication partner device for each of a plurality of division periods obtained by dividing one TDD burst period in the TDD communication method.

*FIG. 12*

20 :  ASA system diagram to transmit HDMI protocol (1)

**Description**

TECHNICAL FIELD

The present disclosure relates to a communication device and a communication system.

BACKGROUND ART

A technique for performing high-speed serial communication via a transmission cable connected between a plurality of devices has been proposed (Patent Document 1). This type of high-speed serial communication is used in various fields, and is used for communication between in-vehicle devices, for example.

CITATION LIST

PATENT DOCUMENT

Patent Document 1: Japanese Patent Application Laid-Open No. 2011-239011

SUMMARY OF THE INVENTION

PROBLEMS TO BE SOLVED BY THE INVENTION

On the other hand, mainly in consumer devices, a high-definition multimedia interface (HDMI) has been widely used as a high-speed interface standard for transmitting a large-capacity video signal and an audio signal.
A TV, a Blu-ray reproduction device, and the like may be mounted on or brought into a vehicle, and enabling transmission and reception of an HDMI signal in the high-speed serial communication for in-vehicle use described above improves convenience.
However, since the transmission distance of an HDMI signal is only about several meters, there is an issue that the locations of a video device and an in-vehicle monitor are limited. Therefore, the present disclosure provides a communication device and a communication system capable of transmitting and receiving an HDMI signal over a longer distance in a high-speed serial communication method different from the HDMI.

SOLUTIONS TO PROBLEMS

In order to solve the above issue, according to the present disclosure, a communication device including:

an encoder that generates a packet of a time division duplex (TDD) communication method including a high-definition multimedia interface (HDMI) signal; and
a communication unit that transmits the packet to a communication partner device for each of a plurality of division periods obtained by dividing one TDD burst period in the TDD communication method.

The communication unit may transmit the packet to a communication partner device for each of the division periods of 6.844 [$\mu$s] obtained by dividing the one TDD burst period into four or 3.422 [$\mu$s] obtained by dividing the one TDD burst period into eight.
The encoder
may generate the packet including a transition minimized differential signaling (TMDS) character in units of 10 bits of a TMDS signal or a fixed rate link (FRL) character in units of 18 bits of an FRL signal

(1) for each division period of 6.844 [$\mu$s] obtained by dividing the one TDD burst period of an automotive SerDes alliance (ASA) standard into four in a case where a transmission capacity of the TMDS signal or the FRL signal included in the HDMI signal is 24 [Gbps] or less,
(2) for each division period of 3.422 [$\mu$s] obtained by dividing one TDD burst period of the ASA standard into eight in a case where a transmission capacity of the TMDS signal or the FRL signal included in the HDMI signal exceeds 24 [Gbps].

The packet may include information regarding a number of the TMDS character or the FRL character.
In a case where the HDMI signal includes a display data channel (DDC) signal, the communication unit may transmit the packet including the DDC signal to the communication partner device in at least one of the plurality of division periods in the one TDD burst period.

A communication speed of the DDC signal included in the HDMI signal may be 400 kbps or higher.

In a case where the HDMI signal includes a consumer electronics control (CEC) signal, the communication unit may transmit the packet including the CEC signal sampled in synchronization with a clock signal shared with the communication partner device to the communication partner device in at least one of the plurality of division periods in the one TDD burst period.

There may be included a decoder that decodes a packet including a response signal of the CEC signal transmitted from the communication partner device and returns the response signal to an HDMI device that has transmitted the CEC signal within 0.35 milliseconds after the HDMI device transmits the CEC signal.

In a case where the HDMI signal includes a +5V signal, the communication unit may transmit the packet including the +5V signal to the communication partner device in at least one of the plurality of division periods in the one TDD burst period.

In a case where the HDMI signal includes an HDMI Ethernet channel (HEC) signal, the communication unit may transmit the packet including the HEC signal to the communication partner device in at least one of the plurality of division periods in the one TDD burst period.

In a case where the HDMI signal includes a Try-byte signal, the communication unit may transmit the packet including a TMDS character in units of 24 bits of the Try-byte signal to the communication partner device for each of the division periods obtained by dividing the one TDD burst period into four.

In a case where the HDMI signal includes the Try-byte signal, the communication unit may transmit information regarding a number of a TMDS character transmitted in a unit time to the communication partner device for each of the division periods obtained by dividing the one TDD burst period into four.

The encoder may generate the packet in which a control signal group including an HPD signal, a DDC signal, and a CEC signal is arranged before a data signal group including a TMDS signal or an FRL signal, and an HEC signal.

The encoder may generate the packet in which an error detection code is separately added to each of the control signal group, the TMDS signal or the FRL signal, and the HEC signal.

According to the present disclosure, there is provided a communication device including:

a decoder that decodes an HDMI signal included in a first packet received by a TDD communication method from a communication partner device;

an encoder that generates a second packet including a response signal addressed to the communication partner device on a basis of the HDMI signal from the communication partner device; and

a communication unit that transmits the second packet to the communication partner device for each one TDD burst period in a TDD communication method.

The decoder may decode an HDMI signal included in a first packet received by a TDD communication method from the communication partner device, and reproduce a frequency of a TMDS clock or an FML clock on a basis of information regarding a number of a TMDS character or an FRL character per unit time included in the decoded HDMI signal.

In a case where information regarding a number of a TMDS character per unit time is included in the decoded HDMI signal, the decoder may reproduce a TMDS character period.

In a case where the HDMI signal decoded by the decoder includes a CEC signal, the communication unit may transmit the second packet including a response signal to the CEC signal to the communication partner device such that an HDMI device connected to the communication partner device receives the response signal within 0.35 [milliseconds] after the HDMI device transmits the HDMI signal including the CEC signal to the communication partner device.

There may be included a power supply unit that supplies a +5V power signal to a reproduction device of the HDMI signal in a case where the HDMI signal decoded by the decoder includes a +5V signal, and

the encoder may generate the second packet including a hot plug detected (HPD) signal in a case where the HDMI signal decoded by the decoder includes the +5V power signal.

In a case where the HDMI signal including an audio return channel (ARC) signal is transmitted to the communication partner device, the encoder may generate the second packet in which a 4-byte subframe including timeslots 0 to 31 is included, a preamble that transmits timeslots 0 to 3 is converted into a 4-bit specific code, and a timestamp at which the ARC signal is input is input in a timeslot 4.

According to the present disclosure, there is provided a communication system including:

a first communication device; and

a second communication device that alternately transmits and receives information to and from the first communication device within a period allocated by a time division duplex (TDD) communication method,

in which the first communication device includes:

an encoder that generates a first packet of the TDD communication method including a high-definition multimedia interface (HDMI) signal; and

a communication unit that transmits the first packet to the second communication device for each of a plurality of division periods obtained by dividing one TDD burst period of a Down link in the TDD communication method, and the second communication device includes:

a decoder that decodes an HDMI signal included in the first packet received from the first communication device by the TDD communication method;

an encoder that generates a second packet including a response signal addressed to the first communication device on a basis of the HDMI signal from the first communication device; and

a communication unit that transmits the second packet to the first communication device for each one TDD burst period of an Up link in the TDD communication method.

BRIEF DESCRIPTION OF DRAWINGS

Fig. 1 is a diagram illustrating signals transmitted and received by a standard HDMI.

Fig. 2A is a timing diagram of TMDS signals used in HDMI 1.4b.

Fig. 2B is a timing diagram of TMDS signals used in HDMI 2.0.

Fig. 3 is a timing diagram of FRL signals used in HDMI 2.1.

Fig. 4 is a diagram illustrating data rates of FRL signals and the numbers of transmission lanes to be used.

Fig. 5 is a block diagram illustrating an example of an internal configuration of an HDMI source device.

Fig. 6 is a timing diagram of CEC signals.

Fig. 7 is a block diagram of a SerDes system that performs high-speed serial transmission using a SerDes.

Fig. 8 is a diagram illustrating a packet format to be transmitted and received in a case where the SerDes system in Fig. 7 performs high-speed serial transmission conforming to the ASA standard.

Fig. 9 is a diagram illustrating transmission capacities of a DLL payload of the ASA standard.

Fig. 10 is a diagram illustrating the number of PHY data blocks transmitted in one TDD period by each of transmission capacities SG3 to SG5.

Fig. 11 is a block diagram of a SerDes system in which a transmission lane is increased to two or four.

Fig. 12 is a block diagram of a SerDes system capable of transmitting an HDMI signal using a TDD communication method conforming to the ASA standard.

Fig. 13 is a block diagram of a Serdes system according to a modification of Fig. 12.

Fig. 14 is a diagram illustrating an HDMI signal that can be transmitted in one TDD burst period of the ASA standard.

Fig. 15 is a timing diagram of packet transmission within one TDD burst period conforming to the ASA standard.

Fig. 16 is a diagram illustrating relationships among transmission speeds of an HDMI transmitted according to timings of Fig. 15, the numbers of transmission lanes of a SerDes system 20, and transmission capacities.

Fig. 17 is a diagram illustrating total numbers of PHY data blocks included in one TDD burst period of a Down link of the ASA standard.

Fig. 18 is a diagram for describing processing operation for generating a packet by packing a TMDS signal included in an HDMI signal.

Fig. 19 is a diagram illustrating an example in which a dummy bit is added and packing is performed.

Fig. 20 is a diagram for describing processing operation for generating a packet by packing a TMDS signal included in an HDMI signal.

Fig. 21 is a diagram for describing processing operation for generating a packet by packing an FRI signal included in an HDMI signal.

Fig. 22 is a diagram illustrating an example in which a dummy bit is added and packing is performed.

Fig. 23 is a diagram for describing processing operation for generating a packet by packing an FRI signal included in an HDMI signal.

Fig. 24 is a diagram illustrating an example in which a dummy bit is added and packing is performed.

Fig. 25 is a diagram illustrating a timing at which the first FRL character is input among FRL characters packed every one-fourth or one-eighth of one TDD burst period.

Fig. 26 is a block diagram of a communication device and a communication system that transmit a DDC signal included in an HDMI signal, simplifying Figs. 9 and 10.

Fig. 27 is a diagram illustrating a configuration of a DDC packet.

Fig. 28 is a timing diagram for transmitting a packet including a DDC signal.

Fig. 29 is a block diagram obtained by simplifying Figs. 12 and 13.

Fig. 30 is a diagram illustrating a configuration of a CEC packet.

Fig. 31 is a diagram illustrating a timing at which a packet including a CEC signal is transmitted.

Fig. 32 is a block diagram illustrating an internal configuration of a SerDes (node1) according to a fourth embodiment.

Fig. 33 is a diagram illustrating a format of an IEC60598 packet.

Fig. 34 is a timing diagram at which an ARC signal of the IEC60958 standard is transmitted in a packet of the ASA standard.

Fig. 35 is a diagram illustrating a configuration of an ARC data packet.

Fig. 36 is a diagram illustrating an overall configuration of a Down link packet of a TDD communication method conforming to the ASA standard.

Fig. 37 is a diagram illustrating an overall configuration of an Up link packet of the TDD communication method conforming to the ASA standard.

Fig. 38 is a diagram illustrating a configuration of a Header of a Down link packet and an Up link packet.

Fig. 39 is a diagram illustrating a configuration of a DDC packet.

Fig. 40 is a diagram illustrating a configuration of a CEC packet.

Fig. 41 is a diagram illustrating a configuration of TMDS_FRL_control.

Fig. 42 is a diagram illustrating a configuration of an HEC_control packet.

Fig. 43 is a diagram illustrating a configuration of an ARC_control packet.

Fig. 44 is a diagram illustrating a Try-byte signal output from an HDMI protocol encoder of Fig. 5.

Fig. 45 is a block diagram of a communication device and a communication system that transmit a packet including a Try-byte signal.

Fig. 46 is a diagram illustrating a transmission timing of a packet including a Try-byte signal.

Fig. 47 is a diagram illustrating a configuration of TMDS_FRL_control at the time of transmission of a Try-byte signal.

MODE FOR CARRYING OUT THE INVENTION

Hereinafter, embodiments of a communication device and a communication system will be described with reference to the drawings. Although main components of the communication device and communication system will be mainly described below, the communication device and the communication system may have components and functions that are not illustrated or described. The following description does not exclude the components and functions that are not illustrated or described.

The HDMI is a high-speed interface standard for transmitting a large-capacity video/audio signal, a bidirectional inter-device control signal, and the like, and is widely used mainly in consumer devices. Several standards have been established in the HDMI. The most widely used standards at present are HDMI 1.4b, and HDMI 2.0 and HDMI 2.1 that are the successors thereof.

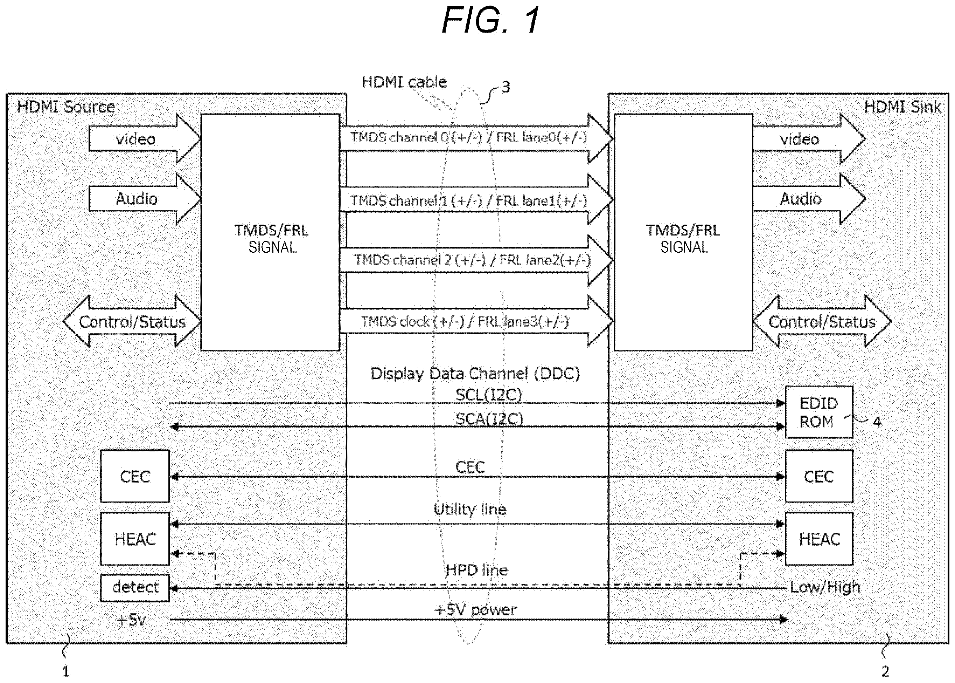

Fig. 1 is a diagram illustrating signals transmitted and received by a standard HDMI. In Fig. 1, an HDMI source device 1 that is a source of a video/audio signal and an HDMI sink device 2 that reproduces the video/audio signal are connected via an HDMI cable. A distance between devices capable of transmitting a signal transmitted and received by the HDMI (hereinafter, HDMI signal) depends on the signal speed, but is usually about 5 m.

The HDMI includes a transition minimized differential signaling (TMDS) signal or a fixed rate link (FRL) signal, a display data channel (DDC) signal, a consumer electronics control (CEC) signal, a +5V power signal, a hot plug detected (HPD) signal, and a Utility signal.

The TMDS signal or the FRL signal transmits high-speed and large-capacity video and audio. The DDC signal is used for reading an extended display identification data read only memory (EDID ROM) 4 and transmitting/receiving high-bandwidth digital content protection system (HDCP) authentication data.

The CEC signal transmits a protocol for performing cooperative operation between HDMI devices. The +5V power signal supplies a power supply voltage from the HDMI source device 1 to the EDID ROM 4 of the HDMI sink device 2, and enables reading of the EDID ROM 4 while the HDMI sink device 2 is idle.

The hot plug detect (HPD) signal indicates that the HDMI devices are connected via the HDMI cable by the HDMI sink device 2 folding a +5V power signal supplied from the HDMI source device 1 back to the HDMI source device 1.

The Utility signal is used together with an HPD signal in order to transmit an HDMI Ethernet channel (HEC) and an audio return channel (ARC). For example, in a case where an HEC signal is included in an HDMI signal, a PHY_Tx in a SerDes (node2) to be described below transmits a packet including an HEC signal to a SerDes (node1) in one of four or eight division periods in one TDD burst period.

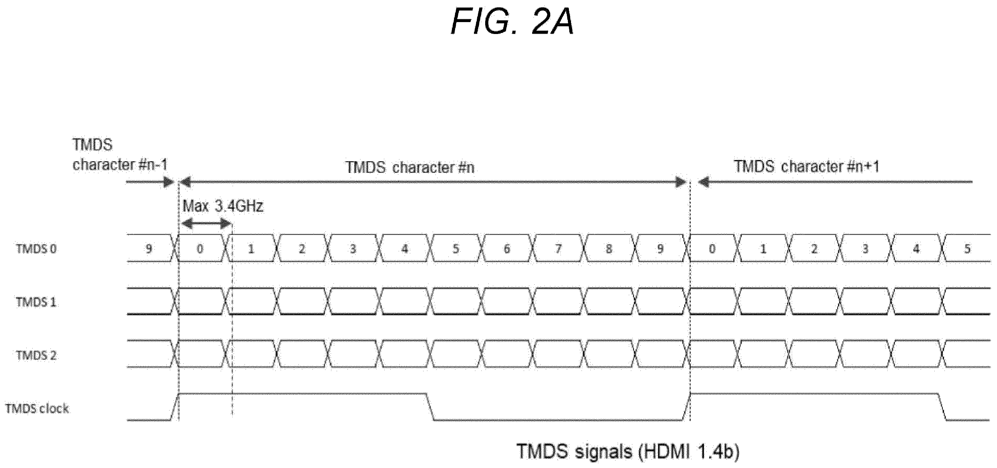

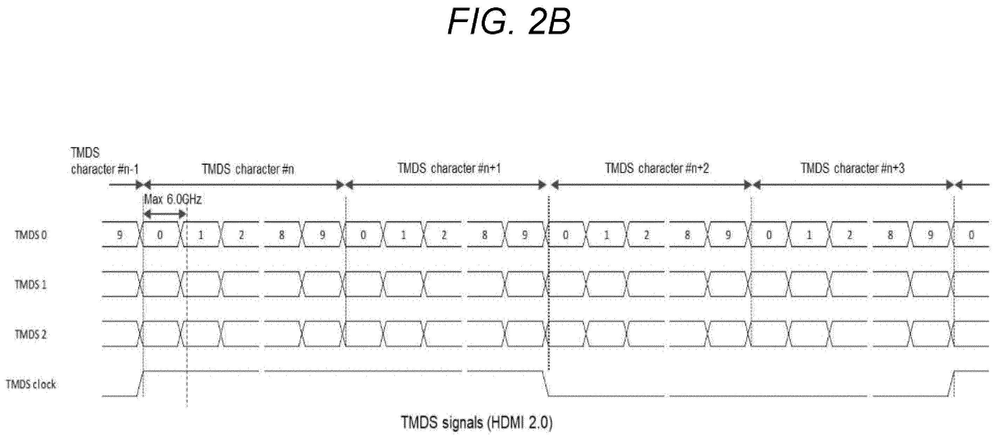

Fig. 2A is a timing diagram of TMDS signals used in the HDMI 1.4b, and Fig. 2B is a timing diagram of TMDS signals used in the HDMI 2.0. The TMDS signals include three TMDS data signals for transmitting high-speed large-capacity data and a TMDS clock signal synchronized with the TMDS data. Each of the three TMDS signals includes data in units of 10 bits called TMDS character subjected to TMDS coding that is a type of 8b10b coding (coding from 8 bits to 10 bits). In the HDMI 1.4b, a maximum rate of one piece of TMDS data is 3.4 GHz.

In the HDMI 2.0, a maximum rate of one piece of TMDS data is 6 GHz. Therefore, the maximum data rate of TMDS is 10.2 Gbps in the HDMI 1.4b and 18.0 Gbps in the HDMI 2.0.

In the HDMI standards up to the HDMI 1.4b, one TMDS character is a TMDS clock cycle. In the HDMI 2.0, four TMDS characters are a TMDS clock cycle in a case where TMDS data with a higher speed than that of the HDMI 1.4b is transmitted.

The TMDS clock is in a synchronization relationship with a pixel clock of a video signal transmitted by the TMDS data, and the HDMI sink device 2 can reproduce a pixel clock from a received TMDS clock.

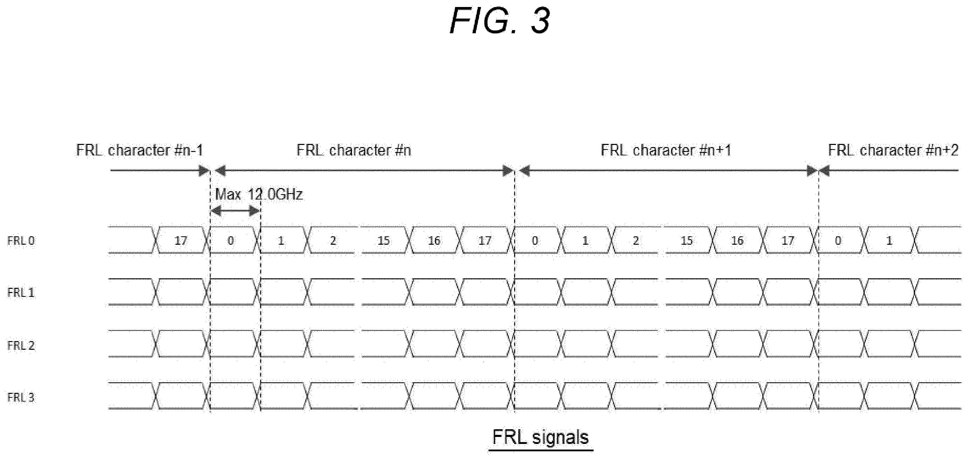

Fig. 3 is a timing diagram of FRL signals used in the HDMI 2.1. Unlike the TMDS signals, the FRL signals are fixed-rate signals irrelevant to a pixel clock of a video signal to be transmitted. Each piece of FRL data included in each of the FRL signals is transmitted in a data unit called FRL character in units of 18 bits subjected to 16b18b coding (coding from 16 bits to 18 bits). The FRL signals are transmitted using three or four transmission lanes. As illustrated in Fig. 3, there is no transmission clock in the FRL signals.

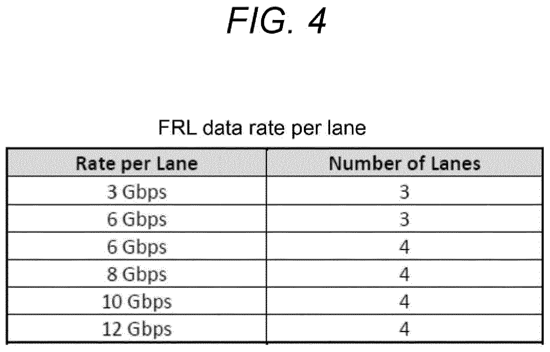

Fig. 4 is a diagram illustrating data rates of the FRL signals and the numbers of transmission lanes to be used. In the HDMI standard, since backward compatibility is required, the HDMI 2.1 needs to include the HDMI 2.0 and the HDMI 1.4b. That is, in the HDMI 2.1, a TMDS mode in which a TMDS clock is transmitted in synchronization with a pixel clock and an FRL mode need to be switchable.

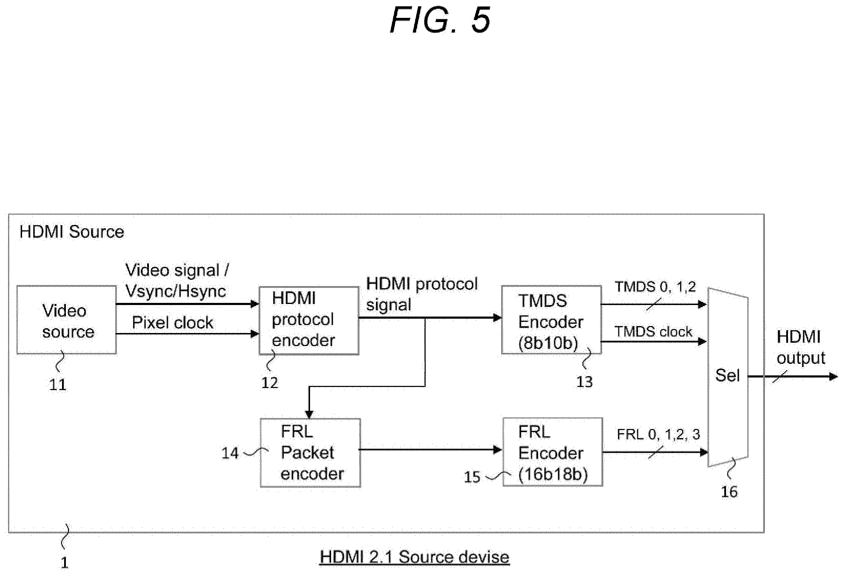

Fig. 5 is a block diagram illustrating an example of an internal configuration of the HDMI source device 1. The HDMI source device 1 in Fig. 5 includes a Video source 11, an HDMI protocol encoder 12, a TMDS encoder 13, an FRL packet encoder 14, an FRL encoder 15, and a selector (Sel) 16.

The Video source 11 outputs a video signal, a synchronization signal Vsynce/Hsync, and a pixel clock. The HDMI protocol encoder 12 outputs an HDMI protocl signal. The TMDS encoder 13 outputs a TMDS signal including TMDS data and a TMDS clock. The FRL encoder 15 outputs an FRL signal including FRL data and an FRL clock. The selector 16 selects and outputs one of the TMDS signal and the FRL signal.

The DDC signal is a signal of an internet integrated circuit (I2C) standard generally used in an inter-device control signal. Therefore, the DDC signal includes two lines of SCL of a clock line and SDA of a data line. As the data rate of I2C, 100 kbps (Standard mode), 400 kbps (Fast mode), 1 Mbps (Fast mode plus), and the like are defined in the I2C standard. In the HDMI standard, the data rate of the DDC signal is required to satisfy 100 kbps (Standard mode), and it is indicated that 400 kbps (Fast mode) may also be used.

The CEC signal is a consumer electronics control (CEC) signal that transmits a protocol for performing cooperative operation between HDMI devices. The CEC signal is a bus including only a data line.

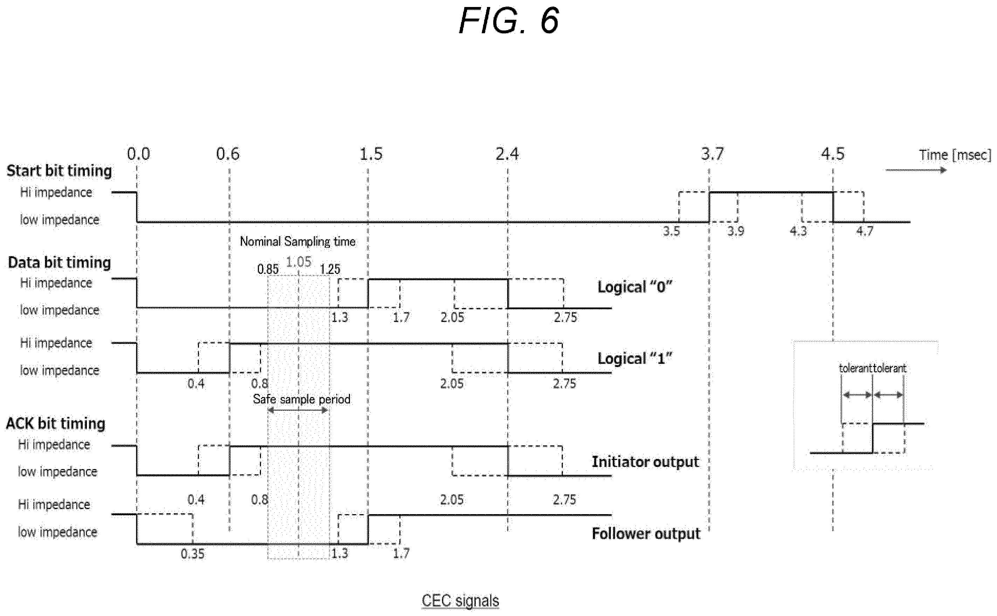

Fig. 6 is a timing diagram of CEC signals. The CEC signals are 1-bit signals having no clock line. Therefore, each of the CEC signals defines a signal change timing in units of milliseconds starting from the time when each signal falls from an H state to an L state. Furthermore, a signal acquisition timing on the reception side of each of the CEC signals is defined to be after 1.05 milliseconds starting from the time when each signal falls from the H state to the L state. Furthermore, signal reception response is performed using an Ack bit, and after an initiator that has received the original CEC signals outputs the Ack bit, the Ack bit needs to be received from a Follower that has transmitted the CEC signals including the Ack bit within 0.35 milliseconds (Ack bit timing in Fig. 4).

As described above, the +5V power signal is a signal for supplying a power supply voltage from the HDMI source device 1 to the EDID ROM 4 of the HDMI sink device 2, and enabling reading of the EDID ROM 4 while the HDMI sink device 2 is idle.

The hot plug detect (HPD) signal gives a notification that the HDMI devices 1 and 2 are connected via the HDMI cable by the HDMI sink device 2 responding with a +5V power signal supplied from the HDMI source device 1 to the HDMI source device 1. The HDMI source device 1 detects that the HDMI cable is connected by the HPD transitioning from low to high, reads the content of the EDID ROM 4 of the HDMI sink device 2 using the DDC signal, and detects a video format that can be received by the HDMI sink device 2, thereby transmitting an optimum video signal.

A Utility signal line is used together with an HDP signal line. The Utility signal line and the HDP signal line can simultaneously transmit a signal corresponding to Ethernet 100Base-TX of bidirectional communication and an IEC60958 signal that is a digital audio signal format from a sink to a source. The function of transmitting these two signal formats is referred to as HDMI Ethernet and audio return channel (HEAC) in the HDMI.

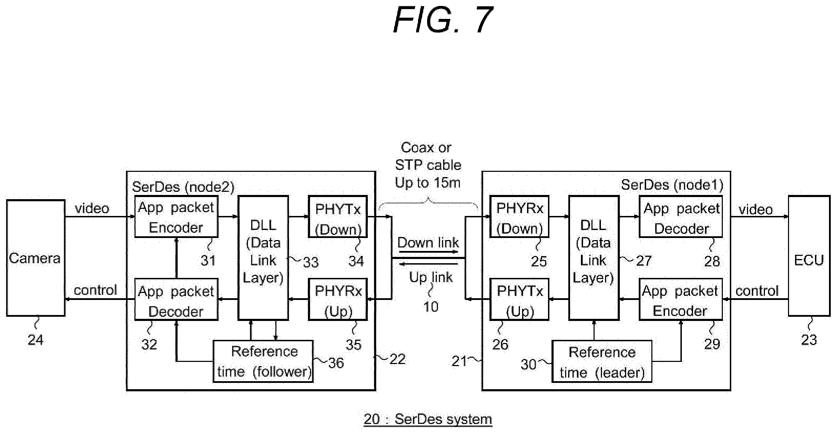

Apart from the HDMI, a high-speed serial transmission method using a SerDes is known. Fig. 7 is a block diagram of a Serializer Deserializer (SerDes) system 20 that performs high-speed serial transmission using a SerDes such as an FPD link.

The SerDes system 20 in Fig. 7 includes a SerDes (node1) 21 and a SerDes (node2) 22. The SerDes (node1) 21 is connected to, for example, an ECU 23, and the SerDes (node2) 22 is connected to, for example, a camera module (Camera) 24. The SerDes (node1) 21 and the SerDes (node2) 22 perform high-speed serial transmission by, for example, a time division duplex (TDD) communication method.

The SerDes (node1) 21 includes a PHY_Rx 25, a PHY_Tx 26, a data link layer (DLL) 27, an App packet decoder 28, an App packet encoder 29, and a Reference time generator (leader) 30.

The PHY_Rx 25 in the SerDes (node1) 21 receives a Down link packet transmitted from the SerDes (node2) 22 through a cable 10. The PHY_Tx 26 transmits an Up link packet to the SerDes (node2) 22 via the cable 10. The DLL 27 extracts an application packet from a Down link packet, receives an application packet to be transmitted to the SerDes (node2) 22 side from the App packet encoder 29, and generates a DLL container. The App packet decoder 28 transmits a video signal obtained by decoding the application packet from the DLL 27 to the ECU 23. The App packet encoder 29 generates the application packet including a control signal transmitted from the ECU 23 and transmits the application packet to the DLL 27.

The SerDes (node2) 22 includes an App packet encoder 31, an App packet decoder 32, a DLL 33, a PHY_Tx 34, a PHY_Rx 35, and a Reference time generator (follower) 36.

The App packet encoder 31 in the SerDes (node2) 22 receives a video signal from the camera module 24 and generates an application packet including the video signal. The App packet decoder 32 transmits a control signal obtained by decoding an application packet from the DLL 33 to the camera module 24. The DLL 33 generates a DLL container including the application packet generated by the App packet encoder 31 and transmits the DLL container to the PHY Tx 34. Furthermore, the DLL 33 extracts an application packet from an Up link packet received by the PHY_Rx 34 and sends the application packet to the App packet decoder 32.

The SerDes system 20 as illustrated in Fig. 7 is used, for example, in an in-vehicle network, and is particularly used for transmitting a high-speed large-capacity video signal from the camera module 24 mounted on a vehicle to the ECU 23. For the transmission cable 10, a coaxial cable (Coax), a shielded twisted pair wire (STP), or the like, which is cheaper than an HDMI cable, is used.

In recent years, transmission standardization work has been performed by the Automotive SerDes Alliance (ASA) that is a SerDes transmission standardization organization for vehicles.

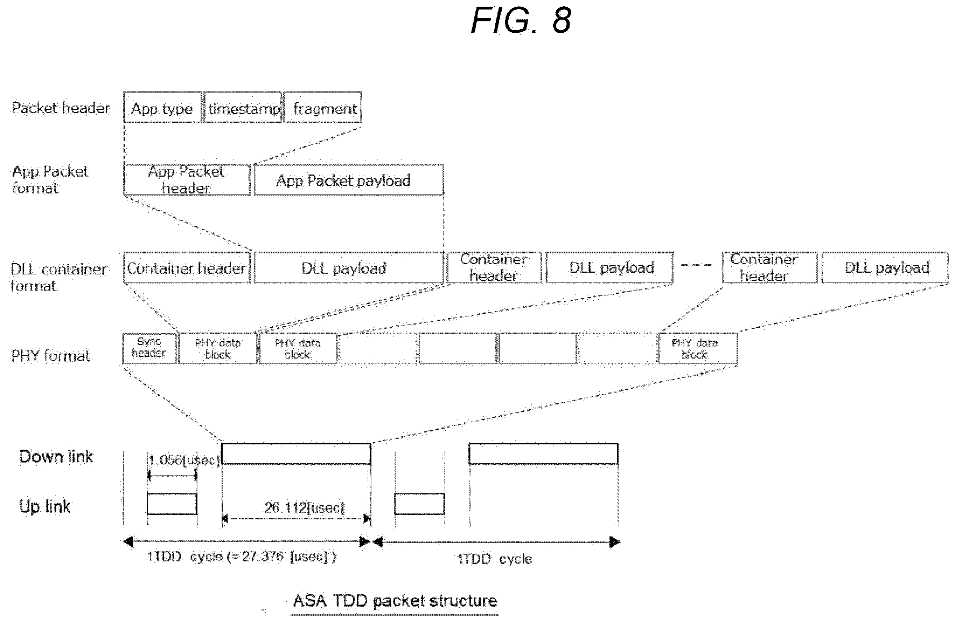

Fig. 8 is a diagram illustrating a packet format to be transmitted and received in a case where the SerDes system 20 in Fig. 7 performs high-speed serial transmission conforming to the ASA standard. A Down link packet transmitted in one TDD burst period includes a plurality of DLL containers in a PHY format. Each of the DLL containers includes a sync header and a PHY data block. The PHY data block, the container header includes a DLL payload and a DLL payload. The DLL payload includes various application packets. Each of the application packets includes an application packet header and an application packet payload. The application packet header includes an application type that represents a type of the application, a timestamp, and a fragment. The timestamp represents a time when a specific timing of the application is measured by a clock shared by the SerDes system 20. The fragment indicates that in a case where the size of the application is large and transmission cannot be performed using one application packet, transmission is performed by division into a plurality of application packets being performed.

The ASA standard adopts asymmetric bidirectional transmission in which a Down link that allows high-speed large-capacity data such as a video signal illustrated in Fig. 7 to flow and an Up link that allows low-speed small-capacity data such as a control signal to flow are time-division multiplexed (TDD). As illustrated in Fig. 8, in the ASA, it is assumed that a Down link transmission period is longer than an Up link transmission period, and a transmission capacity of a Down link packet is much larger than a transmission capacity of an Up link packet.

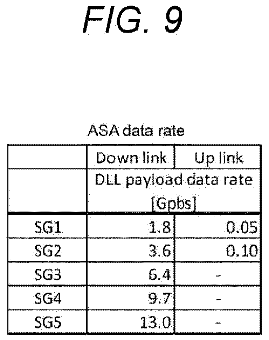

Fig. 9 is a diagram illustrating transmission capacities of a DLL payload of the ASA standard. In the ASA standard, five transmission capacities from SG1 to SG5 are defined. As illustrated in Fig. 8, a Down link packet includes a plurality of PHY data blocks. The number of PHY data blocks included in the Down link packet varies depending on the transmission capacities SG3 to SG5 as illustrated in Fig. 9.

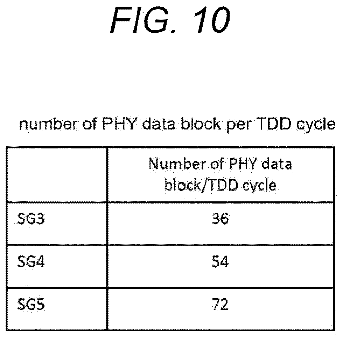

Fig. 10 is a diagram illustrating the number of PHY data blocks transmitted in one TDD period by each of the transmission capacities SG3 to SG5. In the ASA, increasing the transmission capacity up to 52 [Gbps] by increasing the number of transmission lanes to two or four is considered. This is to enable transmission of 4k and 8k video signals, considering that a meter, a console, and the like are replaced with a high-definition LCD panel or a high-definition LCD monitor for fellow passengers is installed in recent vehicles.

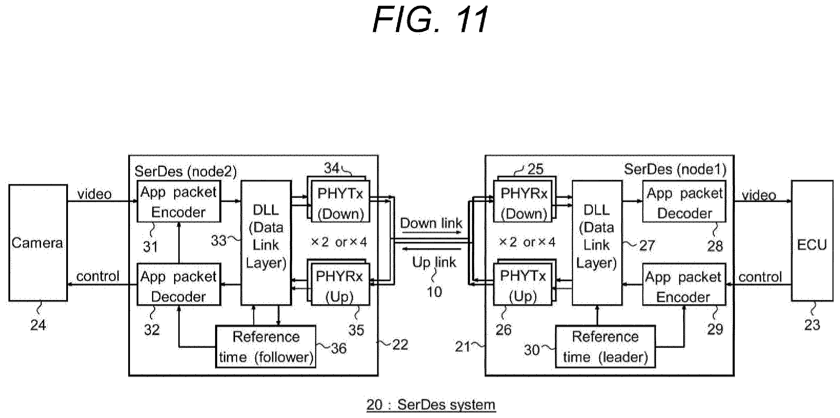

Fig. 11 is a block diagram of the SerDes system 20 in which a transmission lane is increased to two or four. A plurality of PHY_Txs 26 (or 34) and a plurality of PHY_Rxs 25 (or 35) are provided in each of the SerDes (node1) 21 and the SerDes (node2) 22 in accordance with the number of transmission lanes.

In the SerDes system 20 conforming to the ASA standard, a large number of video signals can be transmitted from the camera module 24 to the ECU 23 in a Down link packet. The HDMI standard is more general-purpose than the ASA standard, and it is advantageous in the following respects that an HDMI signal is made to be able to be transmitted by the SerDes system 20 conforming to the ASA standard.

1. Since an HDMI protocol is already widespread, the source device and the sink device confirming to the HDMI standard are accessible, and the access cost is also reduced.

2. Control driver software and the like of the source device and the sink device can be used as they are.

3. The transmission distance of the HDMI is usually about 5 m, but the transmission distance of an HDMI signal can be extended to 15 m by transmitting an HDMI signal using the TDD communication method.

4. A Coax cable and an STP cable that are cheaper than an HDMI cable can be used.

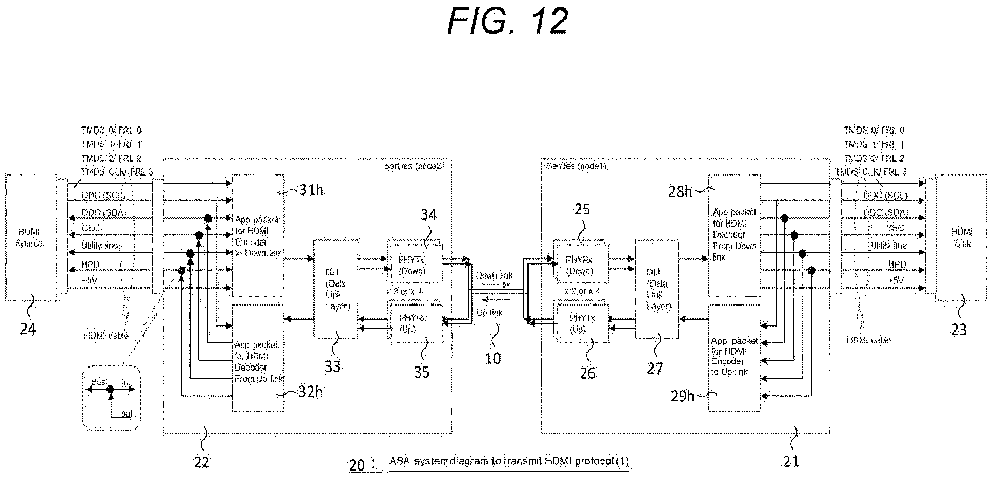

Fig. 12 is a block diagram of the SerDes system 20 capable of transmitting an HDMI signal using the TDD communication method conforming to the ASA standard. The SerDes system 20 in Fig. 12 includes the SerDes (node1) 21 connected to the HDMI sink device 23 and the SerDes (node2) 22 connected to the HDMI source device 24. The SerDes (node1) 21 and the SerDes (node2) 22 transmit an HDMI signal in a packet conforming to the ASA standard. The HDMI signal is transmitted via a gable for high-speed serial transmission between the SerDes (node1) 21 and the SerDes (node2) 22.

An App packet for HDMI encoder 29h and an App packet for HDMI decoder 28h in the SerDes (node1) 21 of Fig. 12 are connected to the HDMI sink device 23 via a common HDMI cable. Similarly, an App packet for HDMI encoder and an App packet for HDMI decoder in the SerDes (node2) 22 are connected to the HDMI source device 24 via a common cable.

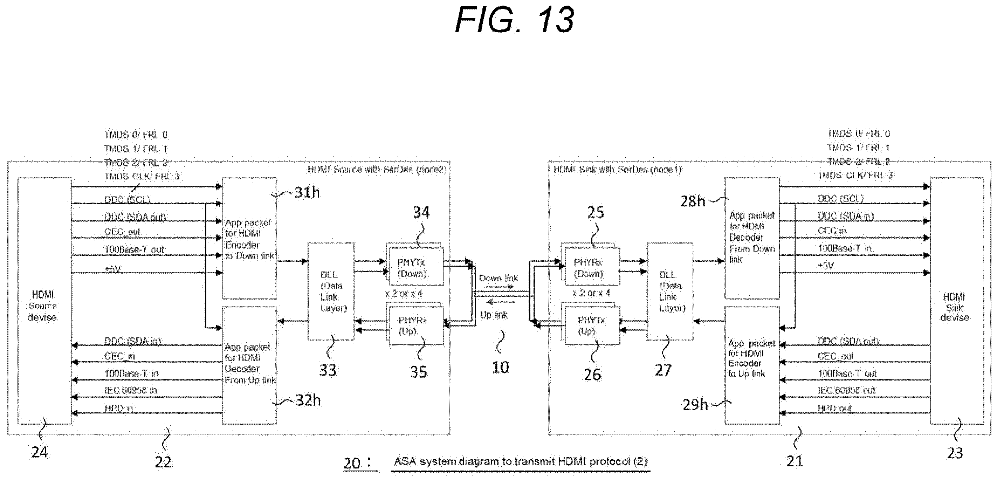

Fig. 13 is a block diagram of a Serdes system according to a modification of Fig. 12. In Fig. 13, an HDMI cable for connecting the App packet for HDMI decoder and the HDMI sink device 23 in the SerDes (node1) 21 is included separately from an HDMI cable for connecting the App packet for HDMI encoder and the HDMI sink device 23 in the SerDes (node1) 21. Similarly, an HDMI cable for connecting the App packet for HDMI decoder and the HDMI source device 24 in the SerDes (node2) 22 is included separately from an HDMI cable for connecting the App packet for HDMI encoder and the HDMI source device 24 in the SerDes (node2) 22.

However, in a case where the HDMI signal is transmitted in a packet conforming to the ASA standard, there are the following issues.

1. The HDMI signal includes the TMDS signal or the FRL signal, but the TMDS signal and the FRL signal are different from each other in signal form as illustrated in Figs. 2A, 2B, and 3, and a packet configuration that can support both signal forms is required.

2. A packet configuration for transmitting TMDS clock frequency information for reproducing a pixel clock on the HDMI sink device 23 side is required.

3. A packet configuration for transmitting FRL transmission rate information is required.

4. As illustrated in Figs. 2A, 2B, and 3, the TMDS signal and the FRL signal are temporally continuous signals, but in the TDD communication method conforming to the ASA standard, signals are transmitted in a time division manner, so that a packet configuration that is temporally discontinuous is required.

5. It is necessary to reduce a buffer capacity for signal conversion and conversion latency as much as possible.

6. The DDC signal needs to be transmitted at a transmission speed of an I2C standard mode (100 kbps) or higher.

7. After an initiator that transmits a CEC signal outputs an Ack bit, an Ack bit of a signal reception response from a Follower needs to be received within 0.35 milliseconds.

8. In a case where the +5V power signal is received, power needs to be supplied to the EDID ROM 4 of the HDMI sink device 23.

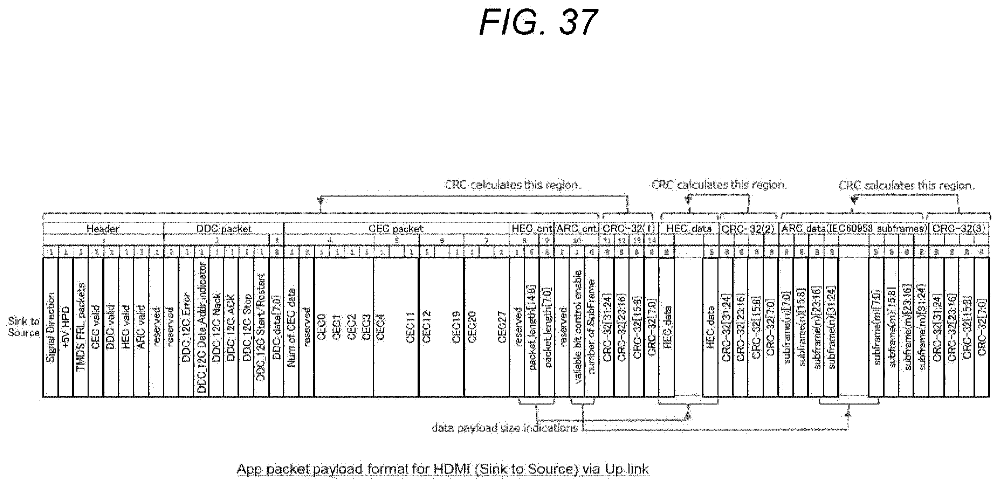

9. In a case where an ARC function is supported, a packet configuration for transmitting an IEC60958 packet of Fig. 37 is required.

The communication device and the communication system according to the present disclosure solve the above-described issues 1 to 9 and also transmit an HDMI signal in a packet conforming to the ASA standard.

Hereinafter, a means for transmitting each of the TMDS signal or the FRL signal, the DDC signal, the CEC signal, the +5V power signal, and the ARC signal included in the HDMI signal in a packet conforming to the ASA standard will be sequentially described.

(First embodiment)

In a first embodiment, a TMDS signal or an FRL signal is transmitted in a packet conforming to the ASA standard.

A communication device and a communication system according to the first embodiment have a block configuration similar to that in Fig. 12 or 13. The communication device according to the first embodiment is the SerDes (node1) 21 or the SerDes (node2) 22 in Fig. 12 or 13. The communication system according to the first embodiment has a configuration similar to that of the SerDes system 20 in Fig. 12 or 13.

While an HDMI signal is a continuous signal, the SerDes system 20 in Fig. 12 or Fig. 13 adopts the TDD communication method, so that an Up link and a Down link alternately perform transmission of a packet discontinuously for each TDD burst period. Therefore, it is necessary to convert an HDMI signal including a continuous signal into a packet and perform transmission of the packet for each discontinuous TDD burst period.

In the first embodiment, the App packet for HDMI encoder 29h in Fig. 12 or 13 generates a packet including an HDMI signal. The PHY Tx 34 in the SerDes (node2) 22 performs transmission of the packet to the SerDes (node1) 21 for each division period of 6.844 [µs] obtained by dividing one TDD burst period in the TDD trust system into four or 3.422 [µs] obtained by dividing one TDD burst period into eight.

More specifically, in a case where the transmission capacity of a TMDS signal or an FRL signal included in an HDMI signal is 24 [Gbps] or less, the App packet for HDMI encoder 31h generates a packet including a TMDS character in units of 10 bits of the TMDS signal or an FRL character in units of 18 bits of the FRL signal for each division period of 6.844 [μs] obtained by dividing one TDD burst period into four in the ASA standard. Furthermore, in a case where the transmission capacity of a TMDS signal or an FRL signal included in an HDMI signal exceeds 24 [Gbps], the App packet for HDMI encoder 31h generates a packet including a TMDS character in units of 10 bits of the TMDS signal or an FRL character in units of 18 bits of the FRL signal for each division period of 3.422 [μs] obtained by dividing one TDD burst period into eight in the ASA standard.

The above-described packet includes, for example, information regarding the number of TMDS characters or FRL characters.

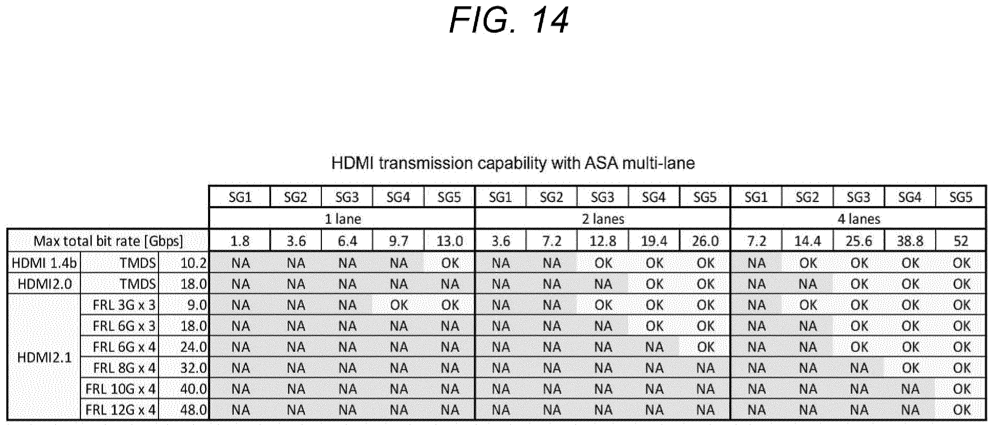

Fig. 14 is a diagram illustrating an HDMI signal that can be transmitted in one TDD burst period of the ASA standard. Since an HDMI signal is a continuous signal, in order to transmit an HDMI signal during a discontinuous TDD burst period, it is necessary to temporarily store the HDMI signal in a buffer memory, convert the HDMI signal in the buffer memory into a packet of the ASA standard in chronological order, and perform transmission of the packet for each TDD burst period.

There is a plurality of standards for the HDMI, and the transmission speed is different for each of the standards, and the transmission speed becomes higher as the standard is newer. It is necessary to increase the number of lanes and the transmission capacity of the SerDes system 20 conforming to the ASA standard as the HDMI transmission speed increases.

Fig. 14 illustrates correspondence relationships among the transmission speeds for respective HDMI standards, the numbers of transmission lanes of the SerDes system 20 of the ASA standard, and the transmission capacities. In Fig. 14, an HDMI signal can be transmitted by the SerDes system 20 only by combinations described as "OK". "NA" is an abbreviation of "Non Available" and means a transmission mode in which an HDMI signal cannot be normally transmitted.

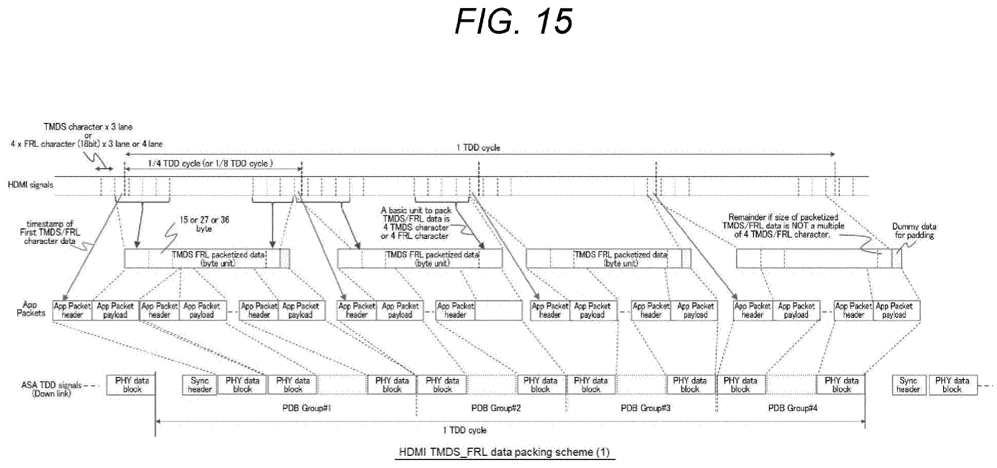

Fig. 15 is a timing diagram of packet transmission within one TDD burst period conforming to the ASA standard. Fig. 15 illustrates an example in which a TMDS signal or an FRL signal included in an HDMI signal is included in a packet conforming to the ASA standard and transmitted in one TDD burst period. The TMDS signal is an encoded signal after 8b10b coding. The FRL signal is an encoded signal after 16b18b coding.

The HDMI signal is asynchronous with one TDD burst period, and is also asynchronous with a generation timing of a packet conforming to the ASA standard.

As described above, there is a plurality of standards for the HDMI, and the transmission speed is different for each of the standards. Furthermore, in the ASA, the transmission rate varies depending on whether the number of transmission lanes is one, two, or four.

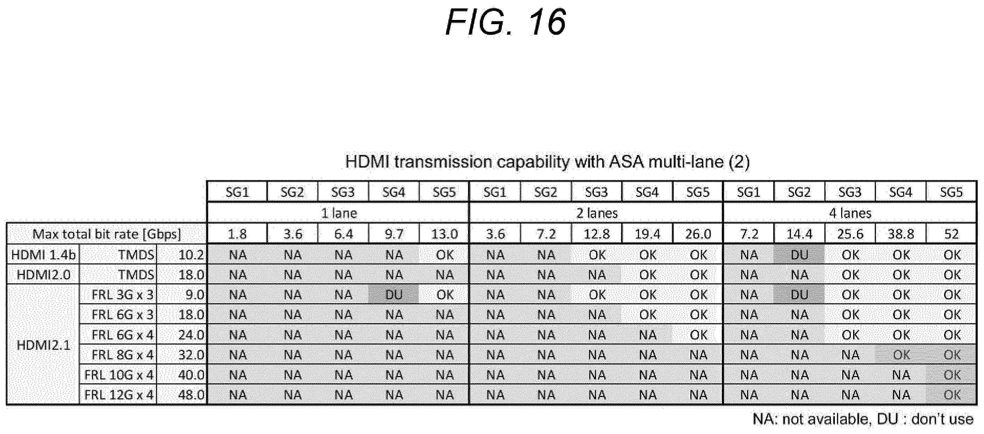

Fig. 16 is a diagram illustrating relationships among transmission speeds of an HDMI transmitted according to timings of Fig. 15, the numbers of transmission lanes of the SerDes system 20, and transmission capacities. In Fig. 16, some combinations that are "OK" in Fig. 14 are set as "DU". "DU" stands for "don't use" and means that the combination satisfies the transmission condition but is not used.

In the communication system according to the first embodiment, in a case where an input TMDS encode signal or FRL 16b18b encode signal is 24.0 [Gbps] or less, the App packet for HDMI encoder 31h in the SerDes (node2) 22 in Fig. 12 or 13 packs the TMDS encode signal or the FRL 16b18b encode signal every 6.844 [usec] that is one-fourth of an ASA TDD cycle (27.376 [usec]). Alternatively, in a case where an input TMDS encode signal or FRL 16b18b encode signal exceeds 24.0 [Gpbs], the App packet for HDMI encoder 31h packs the TMDS encode signal or the FRL 16b18b encode signal every 3.422 [usec] that is one-eighth of the ASA TDD cycle (27.376 [usec]).

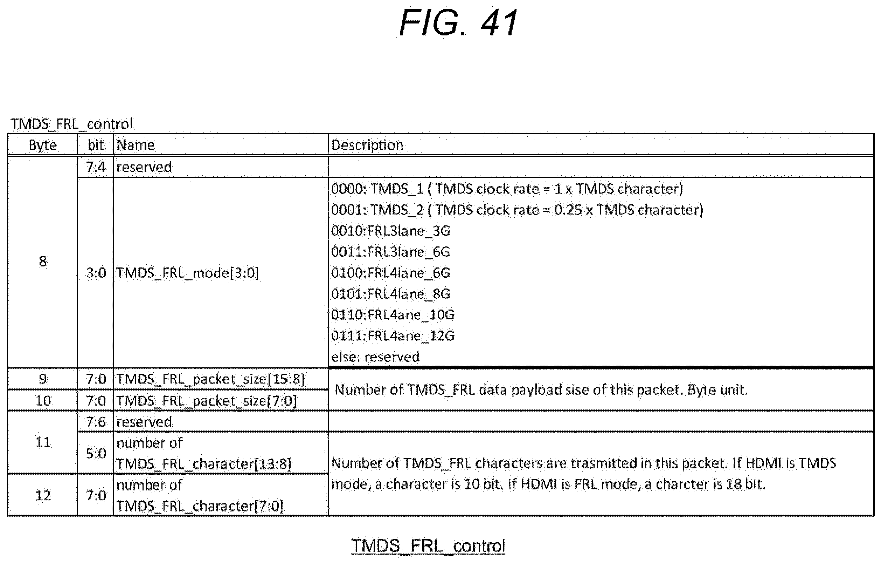

Whether the TMDS signal and the FRL signal are divided into four and packed or divided into eight and packed per one TDD burst period is controlled by a TMDS_FRL_mode of TMDS_FRL_control illustrated in Fig. 41 to be described below. The TMDS_FRL_mode indicates whether the HDMI signal includes either the TMDS signal or the FRL signal.

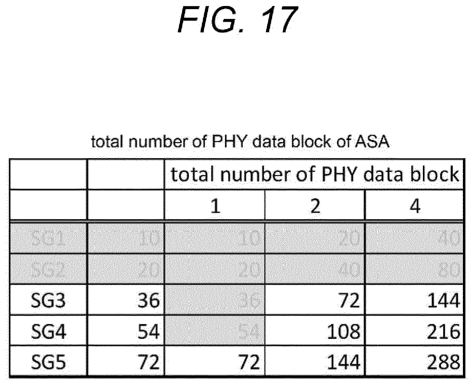

Fig. 17 is a diagram illustrating total numbers of PHY data blocks included in one TDD burst period of the Down link of the ASA standard. As illustrated in Fig. 17, the total numbers of PHY data blocks included in one TDD burst period of the Down link are 36, 54, and 72 for SG3, SG4, and SG5, respectively. Furthermore, by the number of transmission lanes necessary for transmitting an HDMI signal in the ASA standard being limited to the combinations of "OK" in Fig. 16, the total number of PHY data blocks becomes a multiple of four or a multiple of eight, and the total number of PHY data blocks included in one TDD burst period becomes one time, two times, or four times the above-described total numbers as illustrated in Fig. 17.

As a result, an HDMI TMDS signal or an FRL signal can be divided within one TDD burst period (27.376 [usec]) that is a basic transmission unit of the ASA standard, and can be transmitted without excess or deficiency in a PHY data block within one TDD burst period.

As described above, the capacity of the buffer memory that temporarily stores an HDMI signal can be reduced, and the transmission delay of the HDMI signal can be shortened.

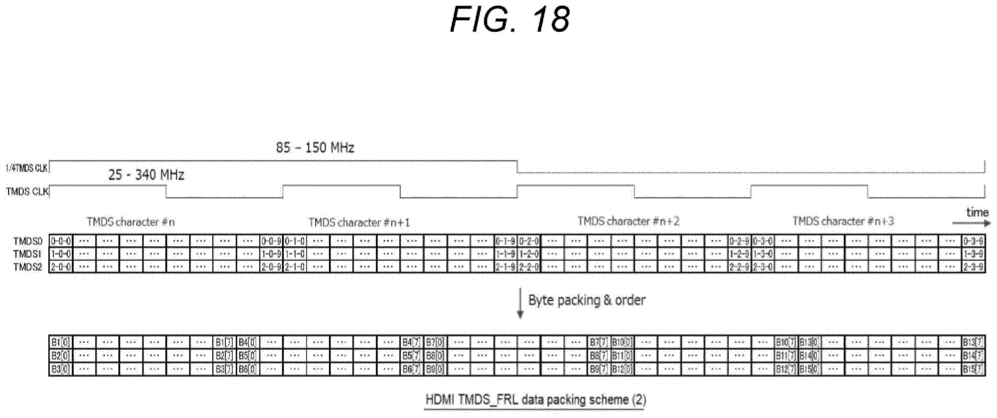

Figs. 18 to 20 are diagrams for describing processing operation for generating a packet by packing a TMDS signal included in an HDMI signal. Figs. 18 to 20 illustrate an example in which TMDSs 0 to 2 are transmitted using three transmission lanes by the HDMI 2.0. In a case where a TMDS clock is 340 MHz or more, a clock having a frequency of one-fourth is generated. A TMDS signal of 10 bytes is input to the App packet for HDMI encoder 29h every period of the TMDS clock. The App packet for HDMI encoder 31h performs packing in byte units for each of the TMDS 0, the TMDS 1, and the TMDS 2 on the basis of the rising of the TMDS clock.

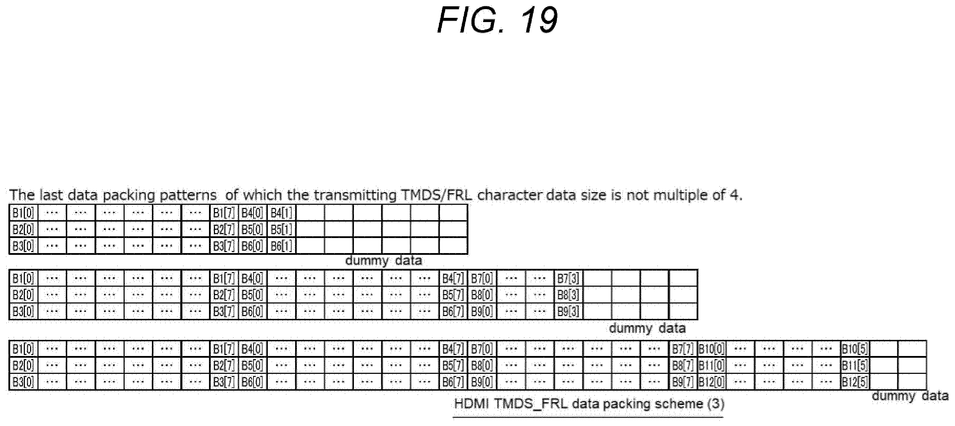

B1[0] in Fig. 18 indicates the zero-th bit of a byte #1 of the TMDS signal. Since a TMDS character is a unit of 10 bits, 40 bits * three lanes (TMDS 0, 1, 2) = 120 bits, which are 15 bytes, is satisfied for four TMDS characters. In a case where the number of TMDS characters to be packed is not a multiple of four, the bits are not in a byte unit, and thus, as illustrated in Fig. 19, dummy bits are added to the end of the TMDS character so that the bits are set to be in a byte unit, and packing is performed so that adjustment to a byte unit is performed.

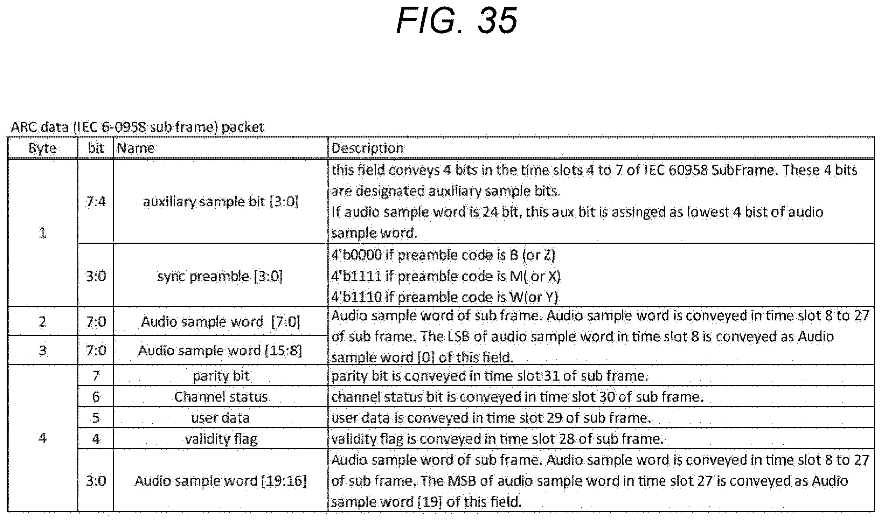

TMDS data included in each App packet payload is always in units of TMDS characters. As a result, in a case of reproducing a TMDS clock, the reception side can align the rising position of the TMDS clock with the head position of a TMDS character. The number of bytes and the number of TMDS characters transmitted by each App packet payload are stored in the App packet payload as control information and transmitted as illustrated in Fig. 35 to be described below. Details will be described below.

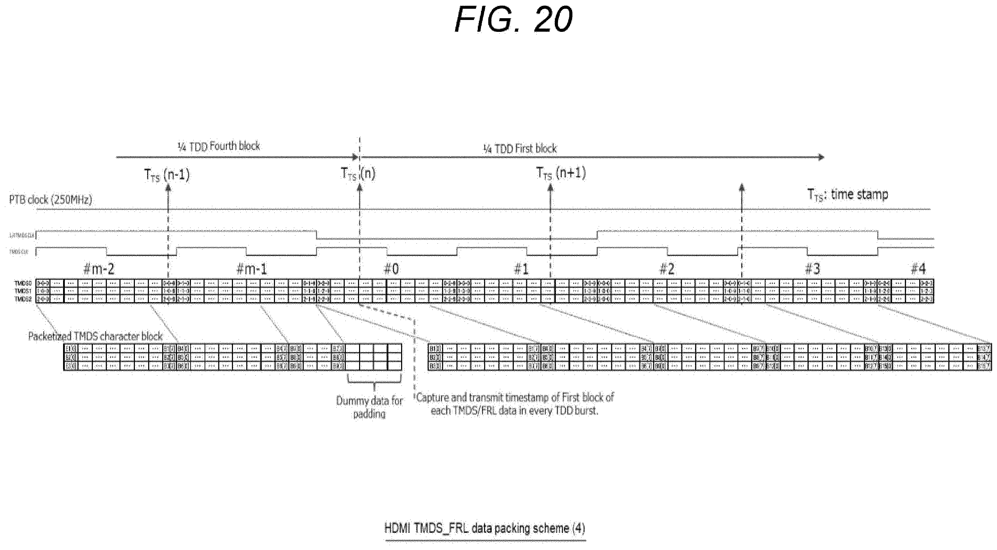

Furthermore, as illustrated in Fig. 20, a reference time at which the first TMDS character of TMDS characters packed every one-fourth or one-eighth of one TDD burst period is input to the App packet for HDMI encoder 31h is acquired as a timestamp and stored in the App packet header illustrated in Fig. 8. A TMDS clock frequency is expressed by the following Formula (1) or Formula (2).

[Math. 1]

TMDS clock frequency

$$= \frac{1}{N} \times \sum_{n=1}^{N-1} \{ (Number\ 0f\ TMDS\ character\ in\ HDMI\ packet\ of\ \frac{1}{4} TDD\ cycle\ (n))$$

$$/(N \times \frac{1}{4} TDD\ cycle\ (= 6844 nsec)\} \quad \cdots (1)$$

$TMDS\ clock\ frequency$

$$= (total\ number\ of\ TMDS\ character\ between\ T_{TS}(n)\ and\ T_{TS}(n+m))/(T_{TS}(n$$

$$+ m) \times T_{TS}(n) \quad \cdots (2)$$

Formula (1) is a formula for calculating a TMDS clock frequency from the number of TMDS characters transmitted during one TDD burst period and a plurality of average values thereof.

Formula (2) is a formula with which the SerDes (node1) 21 on the reception side calculates a TMDS clock frequency from information of timestamps of two points of transmission and the number of TMDS characters transmitted therebetween.

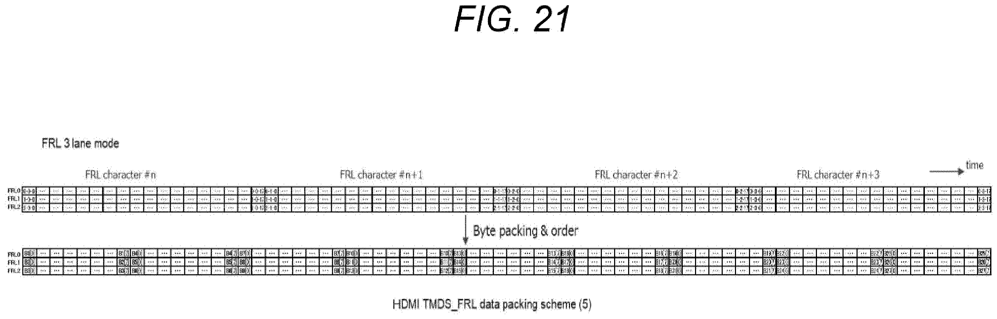

Figs. 21 to 24 are diagrams for describing processing operation for generating a packet by packing an FRI signal included in an HDMI signal. Although the number of FRL lanes may be three lanes or four lanes depending on the transmission capacity, the FRL signal is input to the App packet for HDMI encoder 31h in both cases. The App packet for HDMI encoder 31h packs the FRI signal by dividing the FRI signal into byte units for each of the FRL lanes. At this time, packing in byte units is performed starting from any division position, but packing in byte units may be performed at a division of an FRL character after 16b18b encoding. In both cases, the bits per one FRL lane are 72 bits corresponding to four FRL characters, and are in a byte unit.

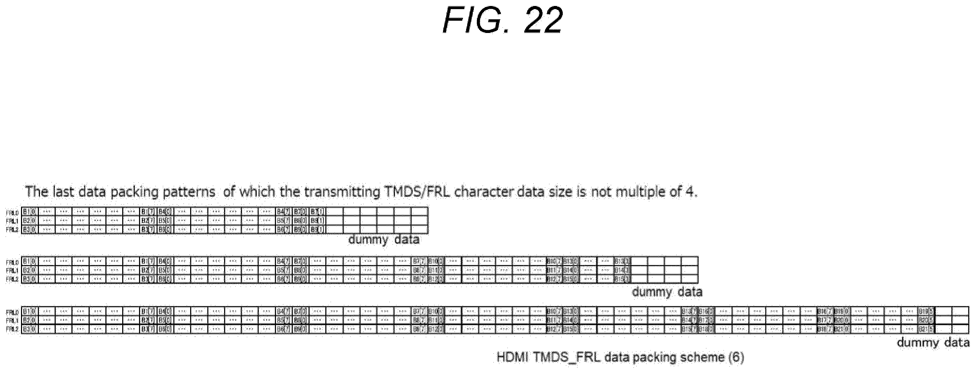

Fig. 21 illustrates an example of packing into an App packet payload in a case of FRL three lanes. In a case where the number of pieces of FRL data converted into the number of FRL characters at the time of transmission to an App packet payload is not a multiple of four, dummy data is packed such that the number is in a byte unit as illustrated in Fig. 22, and is set in a byte unit. Data in which dummy data is packed is FRL data transmitted at the end of one TDD burst period.

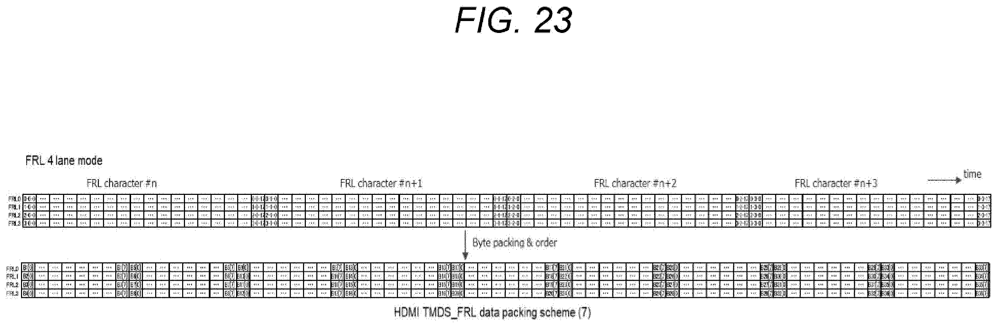

Fig. 23 illustrates a case where the number of FRL lanes is four lanes, but the packing method is similar to that in the case of three lanes. The number of bytes and the number of FRL characters transmitted by each App packet payload are stored in the App packet payload as control information and transmitted. Details will be described below.

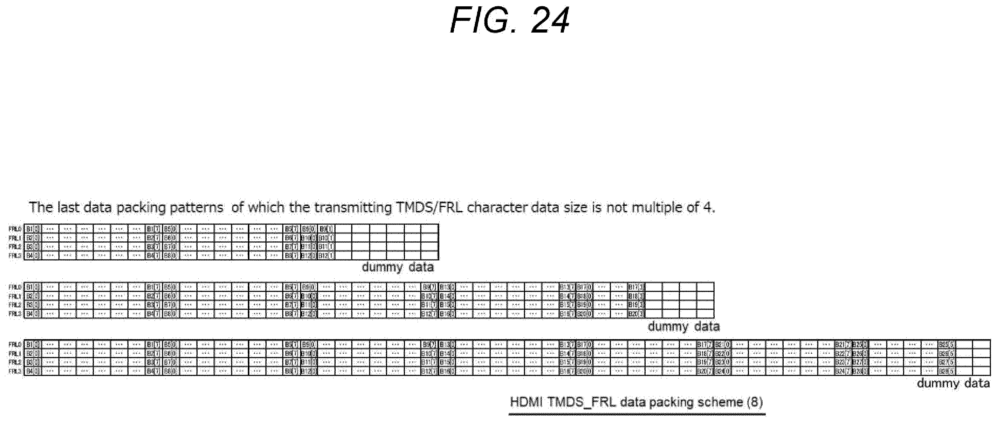

Figs. 22 and 24 illustrate examples in which FRL data transmitted at the end of one TDD burst period is less than a predetermined bit depth. In this case, dummy data is added to the end of the FRL data, and the FRL data ends at a division position.

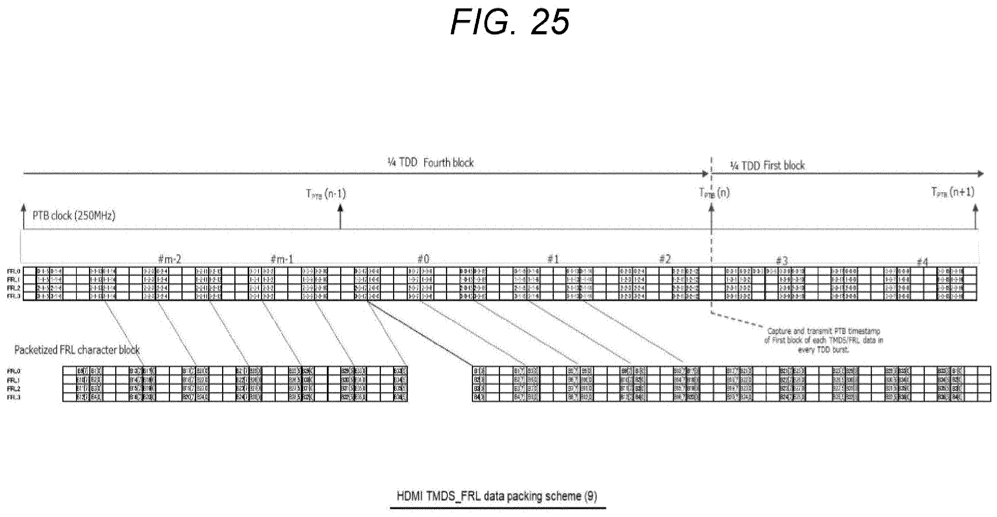

Fig. 25 is a diagram illustrating a timing at which the first FRL character is input among FRL characters packed every one-fourth or one-eighth of one TDD burst period. A reference time at which the first FRL character is input to the App packet for HDMI encoder 31h is acquired as a timestamp, stored in the App packet header illustrated in Fig. 9, and transmitted.

The SerDes (node1) 21 on the reception side can calculate an FRL transmission rate on the basis of Formula (3) from information of timestamps of two points of transmission and the number of FRL characters transmitted therebetween.

[Math. 2]

$$FRL\ frequency$$

$$= \frac{18}{N} \times \sum_{n=1}^{N-1} \{( Number\ of\ FRL\ character\ in\ HDMI\ packet\ of\ \frac{1}{4} TDD\ cycle\ (n))$$

$$/(N \times \frac{1}{4} TDD\ cycle\ (= 6844nsec)\} \quad \cdots (3)$$

Alternatively, the FRL transmission rate may also be calculated from the number of FRL characters transmitted in one TDD burst period section and a plurality of average values thereof.

Note that which mode of the TMDS signal and the FRL signal is used for transmission is determined by the following procedure. Before transmitting a TMDS/FRL data packet, the HDMI source device 24 reads a mode in which the HDMI sink device 23 can perform reception from the EDID ROM 4 by a DDC signal to be described below via the ASA. On the basis of the read information, the HDMI source device 24 sets the transmission mode of TMDS FRL data to an App packet payload to be described below. As a result, which mode of the TMDS signal and the FRL signal is used for transmission is determined.

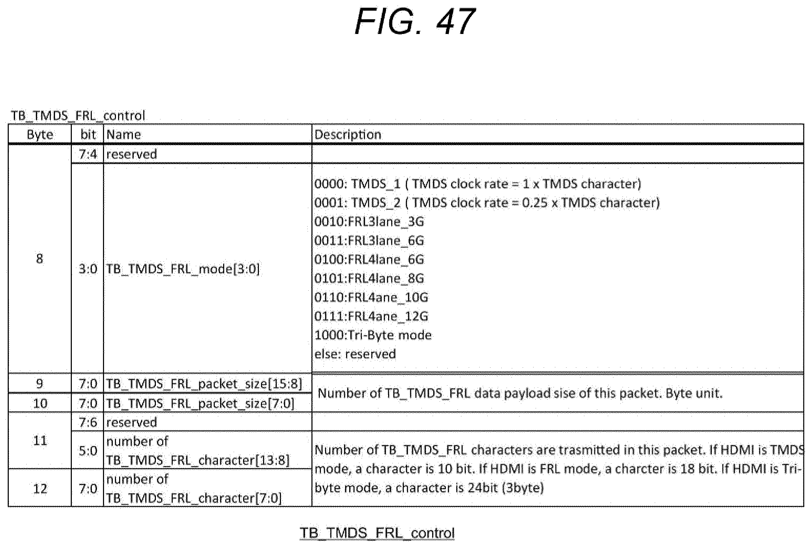

Regardless of which of the TMDS signal and the FRL signal is transmitted, a common HDMI protocol signal is input to the TMDS encoder 13 and the FRL encoder 15 in the HDMI source device 24 of Fig. 5. This signal is called a Try-byte signal in the HDMI specification, and is a three-byte unit signal transmitted every TMDS character period time. As illustrated in Fig. 47 to be described below, this Try-byte signal includes Active video pixel data, Control Period Data transmitted in a video blanking period section, and island data.

The HDMI sink side receives the TMDS signal or the FRL signal, performs TMDS Decoding processing or FRL Decoding processing, and generates a Tri-byte signal. Therefore, an HDMI protocol signal can also be transmitted by, instead of packing and transmitting the TMDS signal or the FRL signal, extracting and packing this Tri-byte signal and transmitting a packet of the ASA standard. Packing of the Tri-byte signal will be described below. The App packet for HDMI decoder 28h in the HDMI sink device 23 decodes an HDMI signal included in a packet received from the HDMI source device 21 by the TDD communication method, and reproduces the frequency of a TMDS clock or an FML clock on the basis of information regarding the number of TMDS characters or FRL characters per unit time included in the decoded HDMI signal. Furthermore, in a case where information regarding the number of TMDS characters per unit time is included in the decoded HDMI signal, the App packet for HDMI decoder 28h reproduces a TMDS character period.

As described above, in the first embodiment, an HDMI signal that is a continuous signal is transmitted by the TDD communication method conforming to the ASA standard by generating a packet in which the HDMI signal is packed as much as the HDMI signal can be transmitted within a period obtained by dividing one TDD burst period that is a discontinuous period into four or eight. As a result, the HDMI signal can be quickly transmitted using a small buffer memory capacity.

The transmission speed of an HDMI is different depending on the HDMI standard, an HDMI signal may include a TMDS signal or may include an FRI signal, and the signal form and the transmission speed are different between the TMDS signal and the FRI signal. According to the first embodiment, regardless of whether the HDMI signal includes the TMDS signal or the FRI signal, a packet including the TMDS signal or the FRI signal can be transmitted for each one TDD burst period of the ASA standard. As a result, the HDMI signal can be transmitted by the TDD communication method conforming to the ASA standard.

(Second embodiment)

A communication device according to a second embodiment transmits a DDC signal included in an HDMI signal during one TDD burst period confirming to the ASA standard. The substance of the DDC signal is an I2C signal.

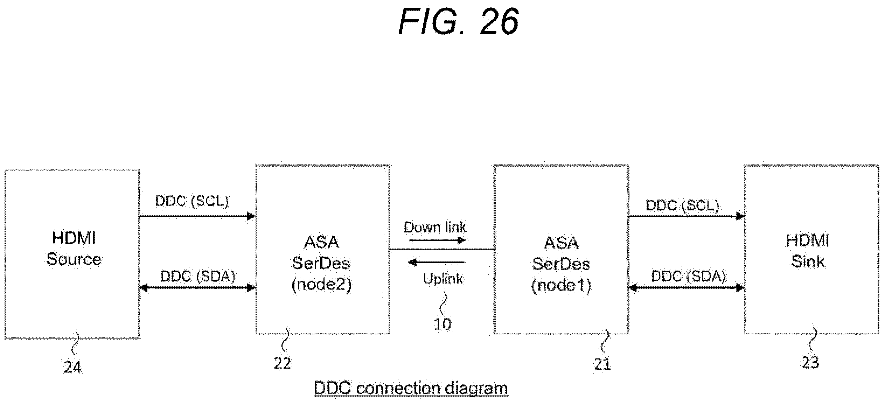

Fig. 26 is a block diagram of the communication device and a communication system that transmit a DDC signal included in an HDMI signal, simplifying Figs. 9 and 10. The communication system in Fig. 26 includes a SerDes (node1) 21 and a SerDes (node2) 22. The SerDes (node1) 21 is connected to an HDMI sink device 23, and the SerDes (node2) 22 is connected to an HDMI source device 24.

A DDC signal transmitted from the HDMI source device 24 is converted into a packet of the TDD communication method conforming to the ASA standard by the SerDes (node2) 22, and is transmitted to the SerDes (node1) 21 by a cable. The SerDes (node1) 21 restores the DDC signal from the received packet and transmits the DDC signal to the HDMI sink device 23. Similarly, a DDC signal transmitted from the HDMI sink device 23 is converted into a packet of the TDD communication method conforming to the ASA standard by the SerDes (node1) 21, and is transmitted to the SerDes (node2) 22 by a cable. The SerDes (node2) 22 restores the DDC signal from the received packet and transmits the DDC signal to the HDMI source device 24.

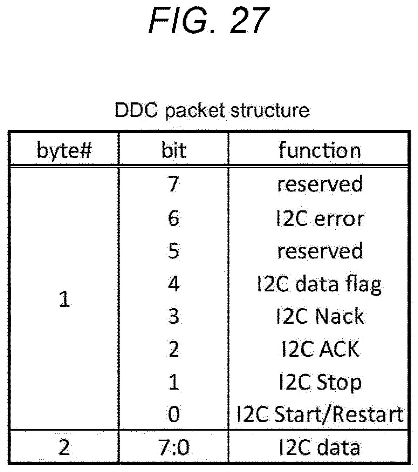

Fig. 27 is a diagram illustrating a configuration of a packet including a DDC signal (hereinafter, DDC packet). As illustrated in Fig. 27, the DDC packet includes two bytes. The zero-th bit of the first byte is a Start/Restart bit of the I2C. The first bit is a Stop bit of the I2C. The second bit is an ACK bit of the I2C. The third bit is a Nack bit of the I2C. The fourth bit is a data flag bit of the I2C. The fifth bit is reserved. The sixth bit is an error bit of the I2C. The seventh bit is reserved.

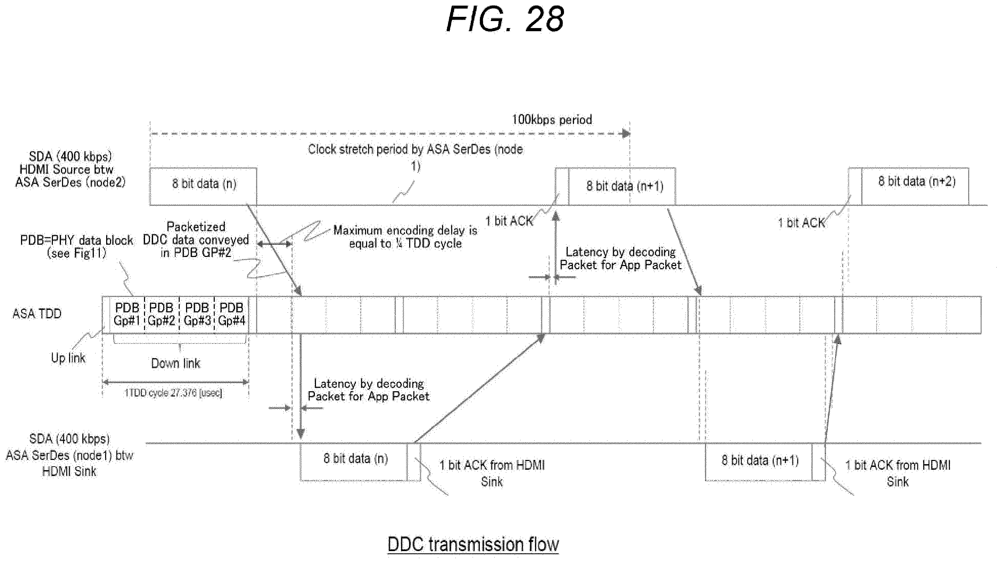

Fig. 28 is a timing diagram for transmitting a packet including a DDC signal. A processing procedure for transmitting the DCC signal at the transmission speed equal to or higher than the I2C standard mode (100 kbps) will be described below on the basis of Fig. 28.

DDC communication speeds between the HDMI source device 24 and the SerDes (node2) 22 and between the HDMI sink device 23 and the SerDes (node1) 21 are at least equal to or higher than an I2C Fast-mode (400 kbps). Therefore, the HDMI source device 24 serving as a master device of the DDC communication, the HDMI sink device 23 serving as a slave device, and the SerDes (node1) 21 and the SerDes (node2) 22 of the ASA standard connected to these devices need to support an I2C transmission mode of the I2C Fast-mode (400 kbps) or higher.

As illustrated in Fig. 15, in the Down link, a packet that transmits HDMI TMDS_FRL data by dividing one TDD burst period into four or eight can include the DDC packet illustrated in Fig. 27. As a result, as illustrated in Fig. 28, the maximum packet conversion delay time in a case where the DDC signal is transmitted in the TDD burst period conforming to the ASA standard can be set to one-fourth of one TDD burst period.

The Up link needs to transmit an HDMI packet including the DDC packet at least once per two TDD cycles.

By the above processing being executed, a transmission speed of 100 kbps or higher can be satisfied between the HDMI source device 24 and the HDMI sink device 23 via the SerDes (node1) 21 and the SerDes (node2) 22 of the ASA standard.

As described above, in the second embodiment, since a DDC signal included in an HDMI signal is converted into a packet of the TDD communication method conforming to the ASA standard and transmitted between the SerDes (node1) 21 and the SerDes (node2) 22, the DDC signal can be transmitted between the HDMI source device 24 and the HDMI sink device 23 without delay.

(Third embodiment)

A communication device according to a third embodiment transmits a CEC signal included in an HDMI signal during one TDD burst period confirming to the ASA standard.

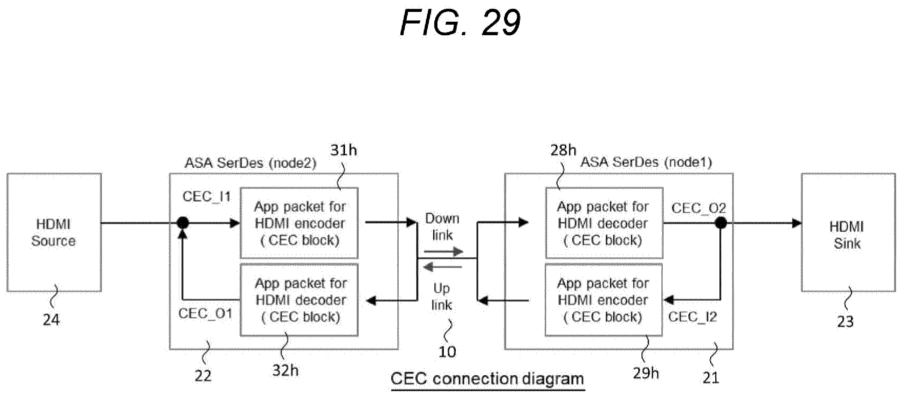

Fig. 29 is a block diagram obtained by simplifying Figs. 12 and 13, and illustrates a block diagram of the communication device and a communication system that transmit a CEC signal. The communication system in Fig. 29 includes a SerDes (node1) 21 and a SerDes (node2) 22. The SerDes (node1) 21 is connected to an HDMI sink device 23, and the SerDes (node2) 22 is connected to an HDMI source device 24.

The SerDes (node1) 21 includes an App packet for HDMI encoder 29h and an App packet for HDMI decoder 28h. Similarly, the SerDes (node2) 22 includes an App packet for HDMI encoder 31h and an App packet for HDMI decoder 32h. Both the SerDes (node1) 21 and the SerDes (node2) 22 can transmit a CEC signal. The CEC signal must receive a response signal (for example, ACK signal) from the reception side within 0.35 milliseconds. 0.35 milliseconds is referred to as a turn around time.

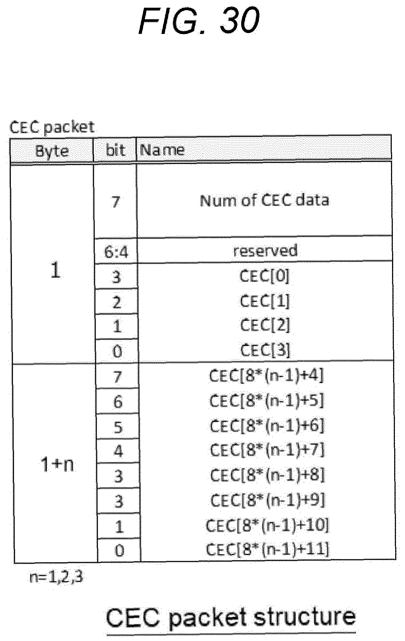

Fig. 30 is a diagram illustrating a configuration of a packet including a CEC signal (hereinafter, CEC packet). As illustrated in Fig. 30, the CEC packet includes four bytes. The 0 to 3 bits of the first byte of the CEC packet indicate values of bits CEC[0] to CEC[3] of the CEC signal. The 4 to 6 bits of the first byte are reserved. The 7 bit of the first byte represents the number of pieces of sampling data of the CEC signal. The 0 to 7 bits of the second to fourth bytes indicate values subsequent to CEC[4].

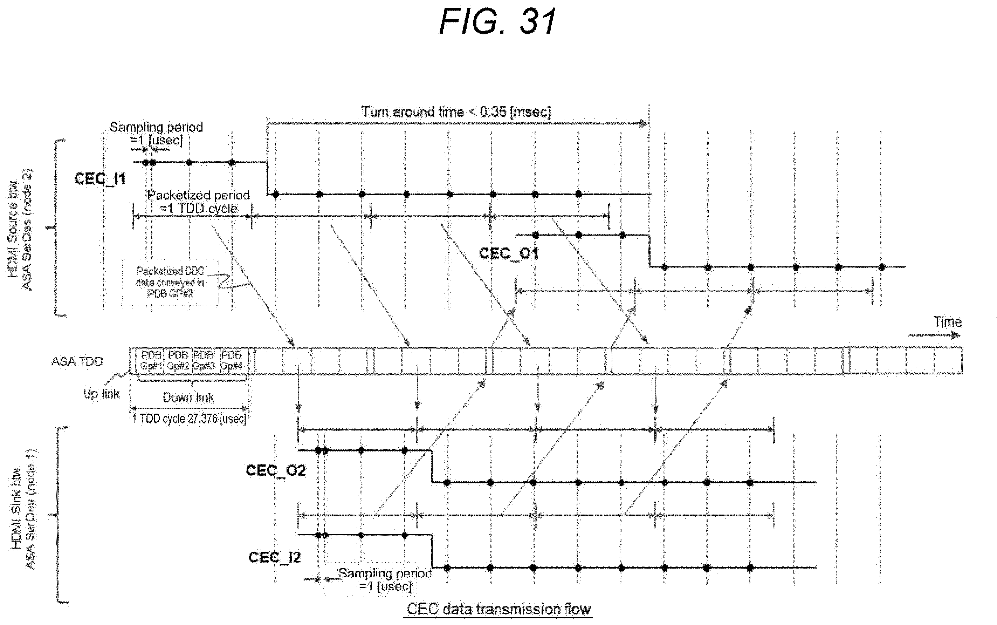

Fig. 31 is a diagram illustrating a timing at which a packet including a CEC signal is transmitted. The CEC packet needs to be transmitted such that a condition that a turn around time of CEC is 0.35 milliseconds or less is satisfied.

In the ASA standard, addition of a function of transmitting a GPIO signal from an external device is considered. In this function, an input GPIO signal is sampled at a reference time shared by the system, and is packed and transmitted for each one TDD burst period time. The reception side reproduces the GPIO signal with reference to the reference time.

This function is used for CEC transmission. The sampling frequency is 1.0 MHz (1.0 [usec]). As a result, the number of pieces of CEC sampling data transmitted by the CEC packet is 27 or 28. The number of pieces of CEC sampling data is stored in the Num of CEC data in Fig. 30.

As illustrated in Fig. 15, in the Down link, a packet that transmits HDMI TMDS_FRL data by dividing one TDD burst period into four or eight is made to be able to include the CEC packet illustrated in Fig. 30. As a result, as illustrated in Fig. 31, the maximum packet conversion delay time in a case where the CEC signal is transmitted to an ASA TDD cycle can be set to one-fourth of one TDD burst period, similarly to the case of DDC signal transmission.

On the other hand, the Up link needs to transmit an HDMI packet including the DDC packet illustrated in Fig. 27 at least once per two TDD cycles.

By the above processing being executed, the turn around time of an Ack signal, which is the strictest time constraint of the CEC signal, can be set to 0.35 milliseconds or less between the HDMI source device 24 and the HDMI sink device 23 via the ASA SerDes devices 21 and 22.

Fig. 31 illustrates an example in which the HDMI source device 24 connected to the SerDes (node2) 22 transmits a CEC signal CEC_I1. A CEC packet including the CEC_I1 is transmitted to the SerDes (node1) 21 in a period of one-fourth of one TDD burst period of the Down link. The SerDes (node1) 21 restores the CEC packet and transmits a CEC signal CEC_O2 to the HDMI sink device 23. The HDMI sink device 23 transmits a CEC signal CEC_I2 that is an ACK signal. A CEC packet including the CEC_I2 is transmitted to the SerDes (node2) 22 in one TDD burst period of the Up link. The SerDes (node2) 22 restores the CEC packet and transmits a CEC signal CEC_O1 to the HDMI source device 24. At this time, according to the present embodiment, the time difference from a signal transition timing of the CEC_I1 to a signal transition timing of the CEC_O1 can be kept within 0.35 milliseconds.

As described above, in the third embodiment, a CEC signal included in an HDMI signal can be included in a packet of the TDD communication method conforming to the ASA standard and transmitted. The CEC signal has a limitation of receiving a response signal within 0.35 milliseconds, but according to the present embodiment, a packet can be transmitted and received such that this limitation is satisfied.

(Fourth embodiment)

In a fourth embodiment, a +5V signal included in an HDMI signal is transmitted in a packet conforming to the ASA standard.

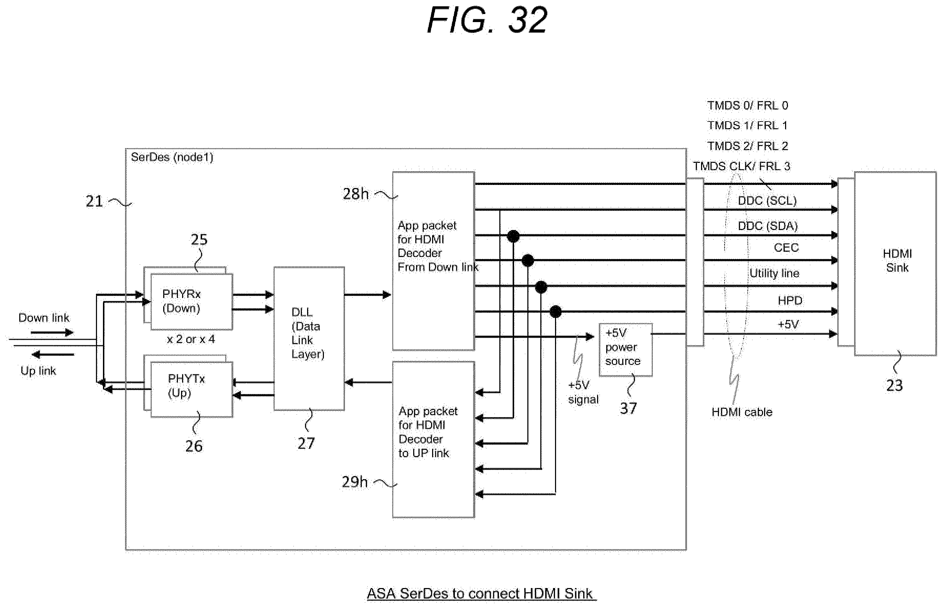

Fig. 32 is a block diagram illustrating an internal configuration of a SerDes (node1) 21 according to the fourth embodiment. The SerDes (node1) 21 in Fig. 32 includes a PHY_Rx 25, a PHY_Tx 26, a DLL 27, an App packet for HDMI encoder 29h, an App packet for HDMI decoder 28h, and a +5 power source 37. The SerDes (node1) 21 is connected to an HDMI sink device 23.

The App packet for HDMI decoder 28h of the SerDes (node1) 21 receives a packet including a +5V signal via a down link conforming to the ASA standard, and in a case where the +5V signal is at a High level, turns on its own or external +5V power source 37 and supplies a +5V power signal of 5 V/55 mA conforming to the HDMI standard to the HDMI sink device 23 via an HDMI cable. This +5V power signal enables reading of an EDID ROM 4 even while the HDMI sink device 23 is idle.

The HDMI sink device 23 sends a +5V power signal supplied from the SerDes (node1) 21 back to the SerDes (node1) 21 as an HPD signal. The SerDes (node1) 21 generates a packet including an HPD signal, and transmits the packet to the SerDes (node2) 22 in one TDD burst period of the Up link. The SerDes (node2) 22 restores the HPD signal from the received packet and transmits the HPD signal to an HDMI source device 24. Upon receiving the HPD signal, the HDMI source device 24 recognizes that the HDMI sink device 23 is connected.

As described above, in the fourth embodiment, since a +5V signal or an HPD signal included in an HDMI signal is included in a packet of the TDD communication method conforming to the ASA standard and transmitted, processing similar to hot plug detection performed by HDMI devices using an HDMI cable can be performed without delay via the TDD communication method.

(Fifth embodiment)

In a fifth embodiment, an ARC signal included in an HDMI signal is transmitted in a packet conforming to the ASA standard.

The ARC signal is originally a signal transmitted from an HDMI sink device 23 to an HDMI source device 24. In a case where the ARC signal is transmitted in a packet of the TDD communication method conforming to the ASA standard, the ARC signal is transmitted by an Up link from a SerDes (node1) 21 to a SerDes (node2) 22. In a case where the ARC signal is packetized, a format of an IEC60958 packet needs to be adopted.

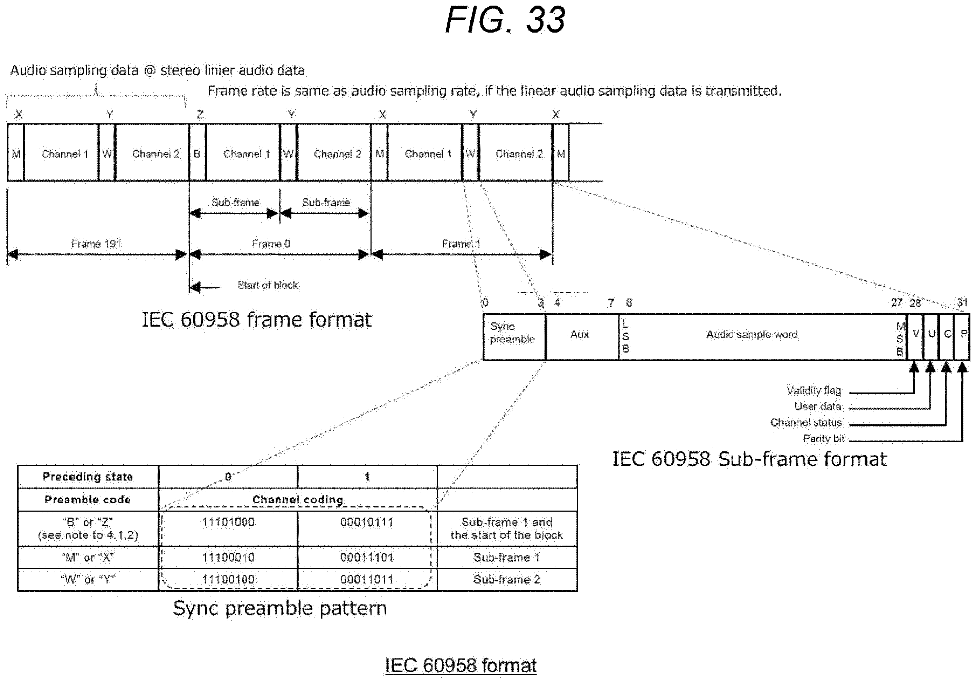

Fig. 33 is a diagram illustrating a format of an IEC60598 packet. The IEC60598 packet includes frames each including two subframes. Each of the frames is audio sampling data. The frame rate is the same as an audio sampling rate in a case where linear audio sampling data is transmitted. Each of the sub-frames includes Sync preambles, Auxs, Audio sampling data, a Validity flag, User data, a Channel status, and a Parity bit. A sub-frame of IEC60958 includes 32 timeslots. One block includes 192 frames.

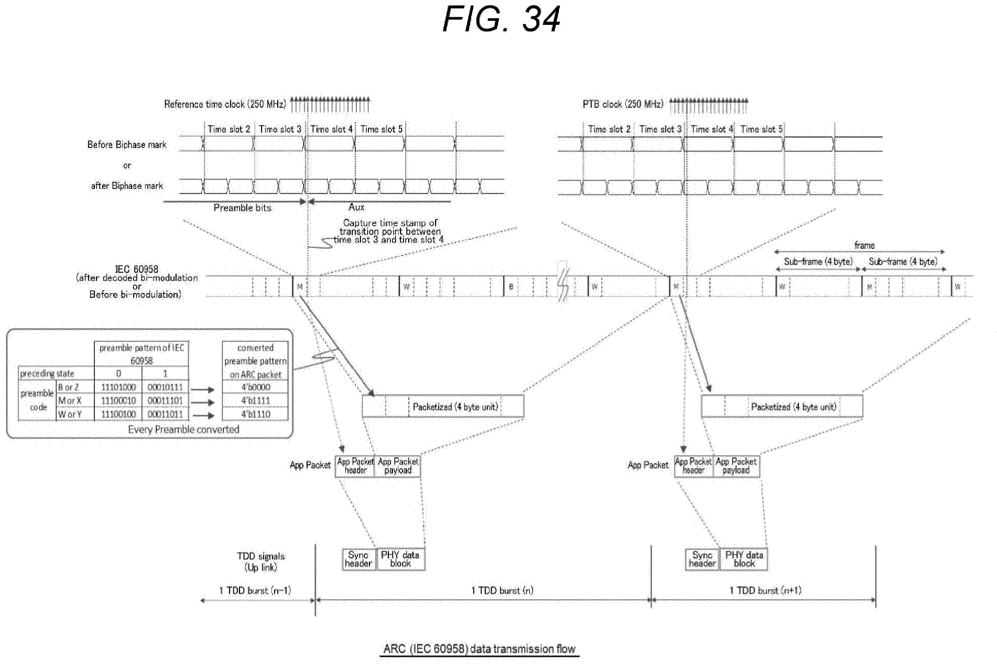

Fig. 34 is a timing diagram at which an ARC signal of the IEC60958 standard is transmitted in a packet of the ASA standard.

Since IEC60958 is subjected to biphase mark encoding on a physical layer, each of the timeslots is 2-bit data. Furthermore, an 8-bit preamble pattern is allocated to the first four timeslots of a subframe after the biphase mark encoding.

In a case where IEC60958 data is transmitted in a packet conforming to the ASA standard, packing is performed in units of subframes including 32 bits before biphase mark encoding or after biphase mark decoding. As illustrated in Fig. 34, each of three patterns of 8-bit preambles allocated to time slots 0 to 3 of a subframe is allocated to a 4-bit code. Since a subframe of IEC60958 to be packed is set to be in units of four bytes with this arrangement, packing is easily performed.

Since packing is performed in units of subframes, the reception side can easily determine the division of each of the subframes. Furthermore, in a case where an error occurs in a preamble code converted into four bits for some reason, since a four bit code "0000" allocated to a "B" preamble indicating the block head of IEC 60958 and four bit codes "1111" and "1110" allocated to "M" and "W" for distinguishing subframes in the other Frames are separated from each other by three or more in the Hamming distance, the types of subframes can be easily distinguished.

Fig. 35 is a diagram illustrating a configuration of a packet including an ARC signal (hereinafter, ARC data packet). More specifically, Fig. 35 illustrates a configuration in which an IEC60958 sub-frame is packed conforming to the ASA standard. As illustrated in Fig. 35, the ARC data packet is four bytes. The field of bits [7:4] of the first byte is auxiliary sample bits [3:0]. This field transmits four bits of timeslots 4 to 7 of the IEC60958 subframe. These four bits are designated auxiliary sample bits. In a case where an audio sample word is 24 bits, the lower four bits are allocated. bits [3:0] of the first byte are sync preambles [3:0]. In a case where the preamble code is B or Z, '0000' is set, in a case where the preamble code is M or X, '1111' is set, and in a case where the preamble code is W or Y, '1110' is set.

The second byte is Audio sample words [7:0], and the third byte is Audio sample words [15:8]. They are audio sample words of a subframe. The Audio sample words are transmitted by timeslots 8 to 27 of the subframe. The least significant bit (LSB) of the audio sample word in the timeslot 8 is transmitted as an audio sample word [0] of this field.

A bit 7 of the fourth byte is a parity bit. The parity bit is transmitted in a timeslot 31 of the subframe. A bit 6 is a channel status. The channel status bit is transmitted in a timeslot 30 of the subframe. A bit 5 is user data. The user data is transmitted in a timeslot 29 of the subframe. A bit 4 is a validity flag. The validity flag is transmitted in a timeslot 28 of the subframe. bits [3:0] are Audio sample words [19:16] and are audio sample words of the subframe. The Audio sample words are transmitted by the timeslots 8 to 27 of the subframe. The most significant bit (MSB) of the audio sample word in the timeslot 27 is transmitted as an audio sample word [19] of this field.

In a case where it is detected that an error has occurred in an application packet during transmission in the ASA standard, the validity flag included in the fourth byte in Fig. 35 may be used as a bit for notifying the subsequent processing that the data is unreliable.

Furthermore, as processing for reproducing an audio sampling rate on the reception side, a timestamp at a time when a timeslot 4 of the subframe of IEC 60958 first stored in the packet is input to the App packet encoder 29 is stored in the header of each App packet and transmitted.

By the above processing being executed, an ARC (IEC 60958) signal can be transmitted by the Up link of the TDD communication method conforming to the ASA standard.

As described above, in the fifth embodiment, the ARC signal transmitted from the HDMI sink device 23 to the HDMI source device 24 can be transmitted as a packet conforming to the ASA standard and in the data format of IEC 60958 by the Up link of the TDD communication method.

(Sixth embodiment)

A sixth embodiment illustrates an overall configuration of a packet including each signal included in an HDMI signal described in the first to fifth embodiments.

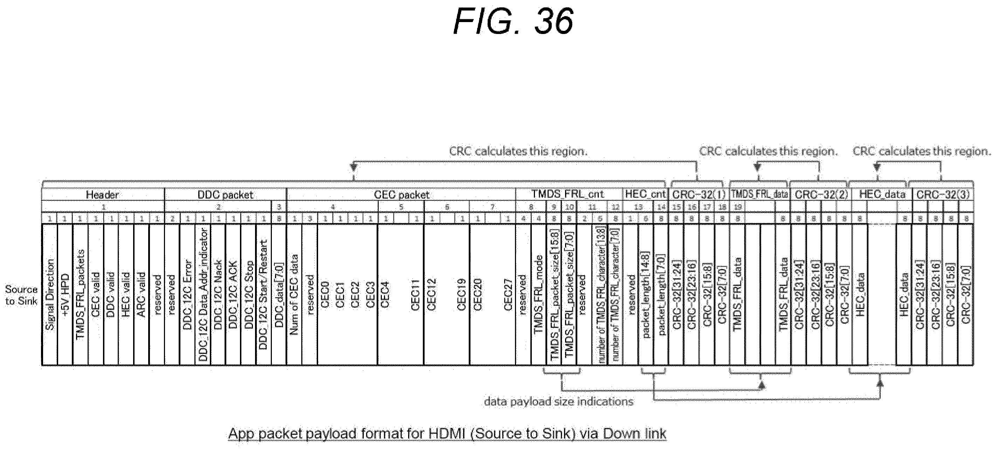

Fig. 36 is a diagram illustrating an overall configuration of a packet transmitted in a Down link of the TDD communication method conforming to the ASA standard (hereinafter, Down link packet). Fig. 37 is a diagram illustrating an overall configuration of a packet transmitted in an Up link of the TDD communication method conforming to the ASA standard (hereinafter, Up link packet).

The packets in Figs. 36 and 37 each include a Header, a DDC packet, and a CEC packet. The configurations of the Header, the DDC packet, and the CEC packet are common to Figs. 36 and 37.

More specifically, the packet of Fig. 36 includes a Header, a DDC packet, a CEC packet, TMDS_FRL_cnt, HEC_cnt, CRC-32(1), TMDS_FRL_data, CRC-32(2), HEC_data, and CRC-32(3). The CRC-32(1) is an error detection code of the Header, the DDC packet, the CEC packet, the TMDS_FRL_cnt, and the HEC_cnt. The CRC-32 (2) is an error detection code of the TMDS FRL data. The CRC-32(3) is an error detection code of the HEC_data. The ninth to 10-th bytes of the TMDS_FRL_cnt are payload sizes of the TMDS_FRL_data. The 13th to 14th bytes of the HEC_cnt are payload sizes of the HEC_data.

The packet of Fig. 37 includes a Header, a DDC packet, a CEC packet, HEC_cnt, ARC_cnt, CRC-32(1), HEC_data, CRC-32(2), ARC_data, and CRC-32 (3). The CRC-32(1) is an error detection code of the Header, the DDC packet, the CEC packet, the HEC_cnt, and the ARC_cnt. The CRC-32(2) is an error detection code of the HEC data. The CRC-32(3) is an error detection code of the ARC data. The ninth to 10-th bytes of the HEC_cnt are payload sizes of the HEC_data. The 13-th to 14-th bytes of the ARC_cnt are payload sizes of the ARC_data. As described above, the CRC-32 (1) is included so that the reliability of a signal of the control system is improved.

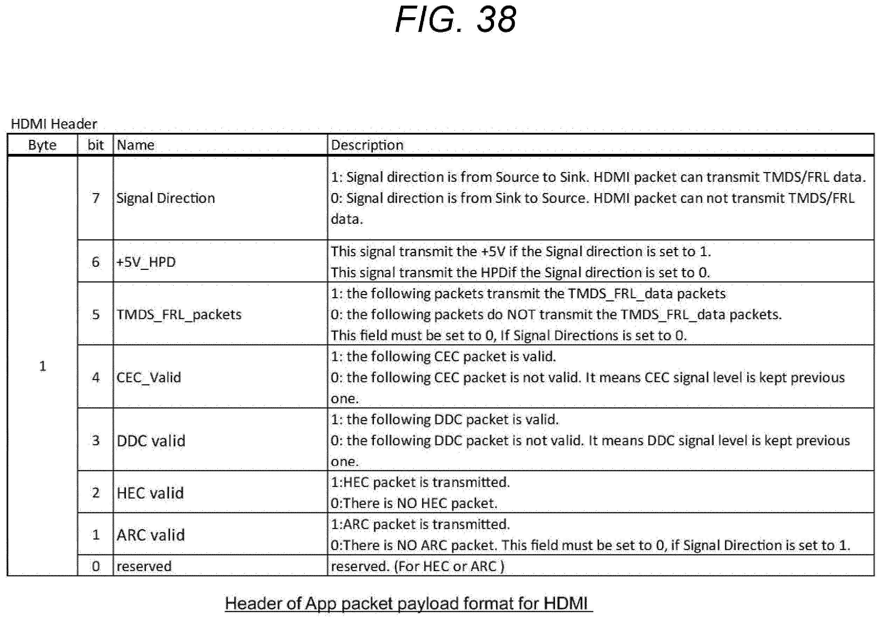

Fig. 38 is a diagram illustrating a configuration of the Header of a Down link packet and an Up link packet. The Signal Direction of the Header (Fig. 32) selects a structure after a CEC packet. The +5V_HPD transmits a +5V signal of an HDMI signal in a packet from the source to the sink, and transmits an HPD signal in a packet from the sink to the source. The subsequent TMDS FRL packets, HEC valid, and ARC valid indicate whether a TMDC/FRL packet, an HEC packet, or an ARC packet is included in the app packet payload. The CEC valid and the DDC valid indicate whether or not a valid DDC packet and CEC packet are included.

More specifically, in a case where the Signal direction of a bit 7 in Fig. 38 is 1, the signal direction is from the source to the sink. An HDMI packet can transfer TMDS/FRL data. In a case where the Signal direction is 0, the signal direction is from the sink to the source. The HDMI packet cannot transmit TMDS/FRL data. The +5V_HPD of a bit 6 transmits +5V in a case where the signal direction is set to 1, and transmits HPD in a case where the signal direction is set to 0. In a case where the TMDS_FRL_packets of a bit 5 is 1, the subsequent packets transmit TMDS_FRL data packets, and in a case where the TMDS_FRL_packets is 0, the subsequent packets do not transmit TMDS_FRL data packets. This field needs to be set to 0 in a case where the signal direction is set to 0. In a case where the CEC Valid of a bit 4 is 1, the subsequent CEC packets are valid, and in a case where the CEC Valid is 0, the subsequent CEC packets are invalid. This means that the CEC signal level is maintained at the same level as before. In a case where the DDC Valid of a bit 3 is 1, the subsequent DDC packets are valid, and in a case where the DDC Valid is 0, the subsequent DDC packets are invalid. This means that the DDC signal level is maintained at the same level as before. In a case where the HEC valid of a bit 2 is 1, an HEC packet is transmitted, and in a case where the HEC valid is 0, there is no HEC packet. In a case where the ARC valid of a bit 1 is 1, an ARC packet is transmitted, and in a case where the ARC valid is 0, there is no ARC packet. This field needs to be set to zero in a case where the signal direction is set to 1. A bit 0 is reserved (in HEC or ARC).

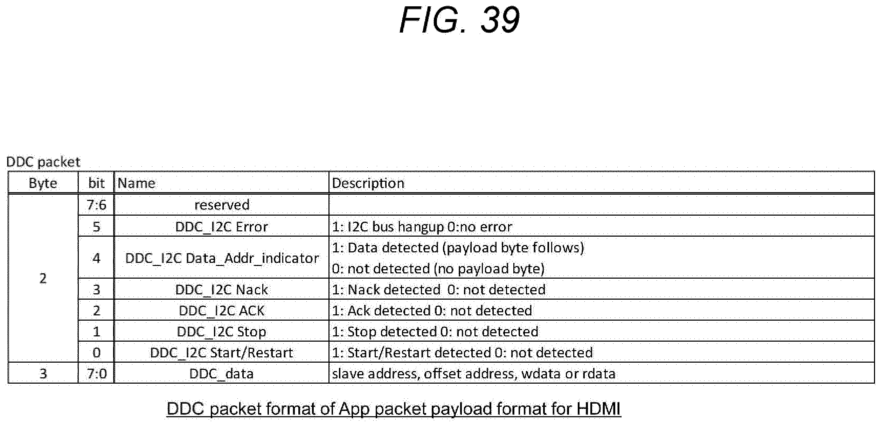

Fig. 39 is a diagram illustrating a configuration of a DDC packet. The DDC packet is arranged in the second to third bytes of a Down link packet and an Up link packet. bits [7:6] of the second byte are reserved. A bit 5 is a DDC_I2C error, and 1 indicates hangup of an I2C bus and 0 indicates no error. A bit 4 is a DDC_I2C data_Addr_indicator, and 1 is data detection (payload byte is following) and 0 is no data detection (no following payload data). A bit 3 is a DDC_I2C Nack, and 1 indicates that Nack is detected and 0 indicates that Nack is not detected. A bit 2 is a DDC_I2C Ack, and 1 indicates that Ack is detected and 0 indicates that Ack is not detected. A bit 0 is a DDC_I2C Start/Restart, and 1 indicates that Start/Restart is detected and 0 indicates that Start/Restart is not detected. bits [7:0] of the third byte are DDC_data, and are a slave address, an offset address, wdata, or rdata.

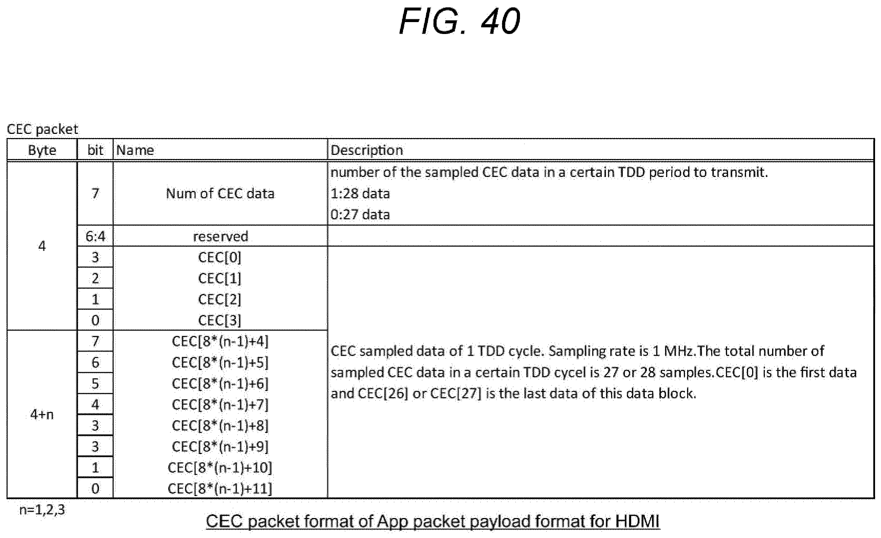

Fig. 40 is a diagram illustrating a configuration of a CEC packet. The CEC packet is arranged in the fourth to seventh bytes of a Down link packet and an Up link packet. A bit 7 of the fourth byte is the Num of CEC data and is the number of pieces of sampled CEC data in a TDD period to be transmitted, and 1 is 28 data and 0 is 27 data. bits [6:4] are reserved. bits [3:0] are CEC [0:3]. bits [7:0] of the fifth to seventh bytes are CEC [8*(n-1)+11] to CEC [8*(n-1)+4], and n = 1, 2, and 3 is defined. bits [3:0] of the fourth byte and the fifth to seventh bytes are CEC sampled data of one TDD cycle. The sampling rate is 1 MHz. The total number of pieces of CEC data sampled in a TDD cycle is 27 or 28 samples. CEC [0] is first data, and CEC [26] or CEC [27] is the last piece of data of this data block.

In a case where the DDC packet and the CEC packet in Figs. 39 and 40 are transmitted, as illustrated in Figs. 28 and 31, four or eight App packet payloads are transmitted during one TDD burst period, and the DDC packet and the CEC packet are transmitted in any one of the App packet payloads. At this time, the CEC valid and the DDC valid are "1" (valid).

On the other hand, in a case where the CEC valid and the DDC valid are "0", the DDC packet and the CEC packet including invalid data are transmitted. In a case where the reception side receives invalid data, both the CEC packet and the DDC packet output Hiz to the connected HDMI device.

Fig. 41 is a diagram illustrating a configuration of TMDS_FRL_control. The TMDS_FRL_control is arranged in the eighth to 12-th bytes of a Down link packet. bits [7:4] of the eighth byte are reserved. bits [3:0] are TMDS_1 (TMDS clock speed = 1 * TMDS characters) in a case of 0000, TMDS_2 (TMDS clock speed = 0.25 * TMDS characters) in a case of 0001, FRL3lane 3G in a case of 0010, FRL3lane 6G in a case of 0011, FRL4lane 6G in a case of 0100, FRL4lane 8G in a case of 0101, FRL4lane 10G in a case of 0110, FRL4lane 12G in a case of 0111, and reserved in a case of other bit strings. bits [7:0] of the ninth byte are TMDS_FRL_packet_size [15:8], and bits [7:0] of the 10-th byte are TMDS_FRL_packet_size [7:0]. The ninth to 10-th bytes represent the number of TMDS_FRL data packets of this packet in a byte unit. bits [7:6] of the 11-th byte are reserved, bits [5:0] are TMDS FRL character [13:8], and bits [7:0] of the 12-th byte are TMDS_FRL_character [7:0]. In the 11-th to 12-th bytes, the number of TMDS_FRL characters is transmitted in this packet. In a case where the HDMI is in the TMDS mode, the character is 10 bits, and in a case where the HDMI is in the FRL mode, the character is 18 bits.

By the TMDS_FRL_mode, the type of TMDS or the type of FRL of TMDS_FRL_data transmitted by the App packet payload is indicated. The TMDS_FRL_control transmits the number of packets of the TMDS_FRL_data transmitted by the App packet payload and the number of TMDS or FRL characters. The reception side correctly decodes a TMDS signal or an FRL signal by the field.

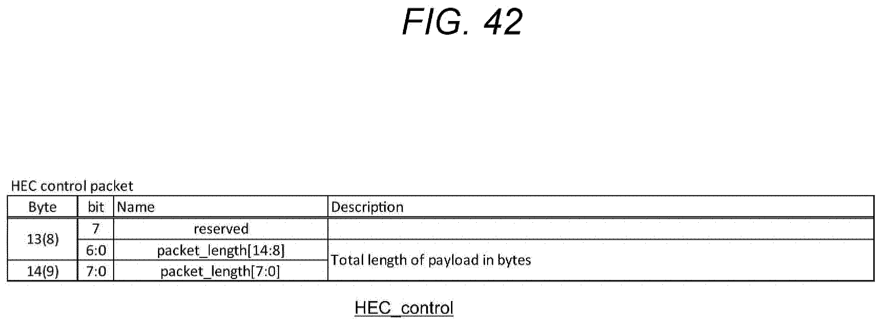

Fig. 42 is a diagram illustrating a configuration of an HEC_control packet. The HEC_control packet is the 13-th to 14-th bytes of a Down link packet and the eighth to ninth bytes of an Up link packet. A bit 7 of the 13 (8)-th byte is reserved, and bits [6:0] are packet_length [14:8]. bits [7:0] of the 14 (9)-th byte are packet_length [7:0]. The packet_length is a byte length of the payload.

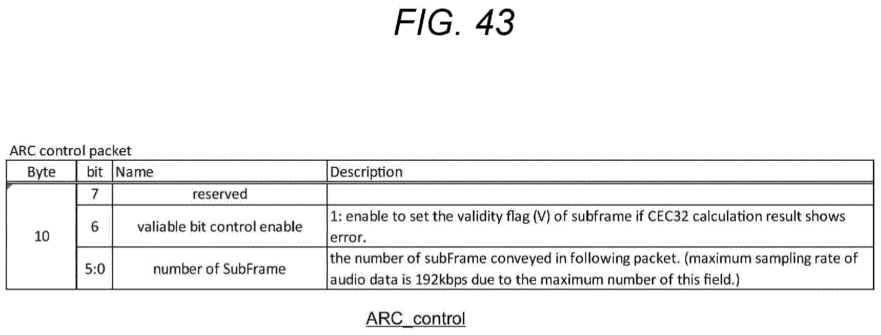

Fig. 43 is a diagram illustrating a configuration of an ARC_control packet. The ARC_control packet is arranged in the 10-th byte of the Up link packet. A bit 7 is reserved. A bit 6 is a valiable bit control enable, and in a case where the valiable bit control enable is 1, setting of a validity flag (V) of a subframe is enabled in a case where a CEC32 calculation result indicates an error. bits [5:0] are the number of subframes and indicate the number of subframes transmitted in the subsequent packet (the maximum sampling speed of audio data is 192 kbps according to the maximum number of this field).

The HEC_control packet and the ARC_control packet indicate the number of HEC and ARC packets transmitted by the App packet payload in a case where the respective packets exist.

As described above, in the sixth embodiment, by a packet having the configuration illustrated in Figs. 36 and 37 being transmitted by the TDD communication method, any type of signal defined by the HDMI standard can be transmitted by the packet conforming to the ASA standard.

(Seventh embodiment)

In a seventh embodiment, a packet of the TDD communication method including a Try-byte signal is transmitted instead of a TMDS signal and an FRI signal.

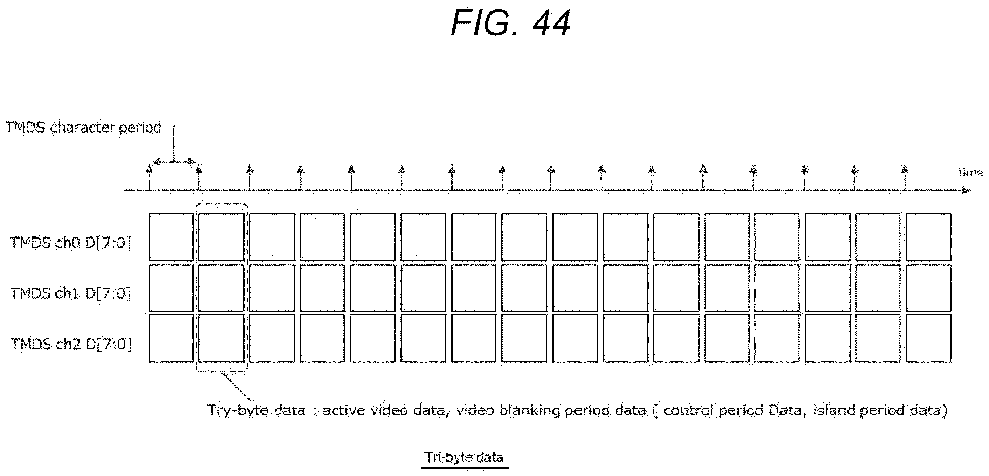

Fig. 44 is a diagram illustrating a Try-byte signal output from the HDMI protocol encoder 12 of Fig. 5. The Try-byte signal includes TMDS ch0 D[7:0], TMDS ch1 D[7:0], and TMDS ch2 D[7:0]. A 1-byte signal of each channel is referred to as Try-byte data. The Try-byte data includes active video data and video blanking period data. Furthermore, the Try-byte data may include control period data and island period data.

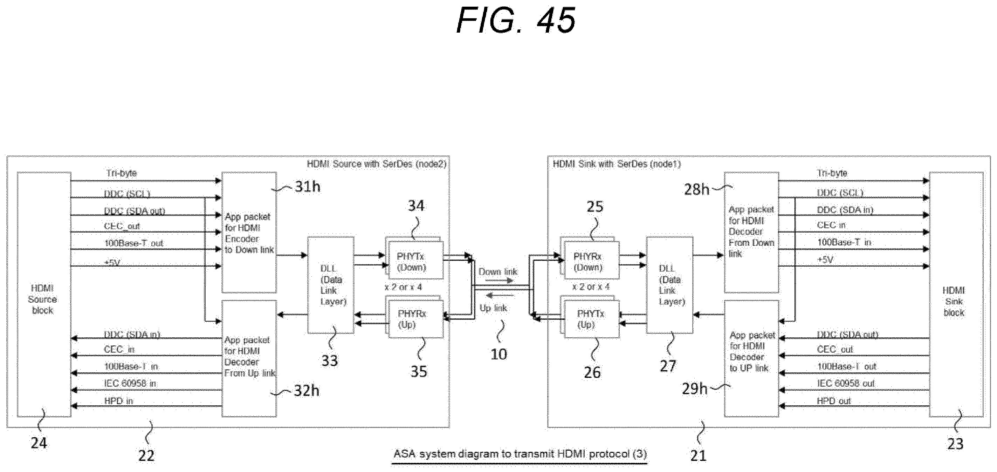

Fig. 45 is a block diagram of a communication device and a communication system that transmit a packet including a Try-byte signal. Fig. 45 is different from Fig. 13 in that an HDMI source device 24 outputs a Try-byte signal instead of outputting a TMDS/FML signal, and an HDMI sink device 23 receives the Try-byte signal instead of receiving the TMDS/FML signal.

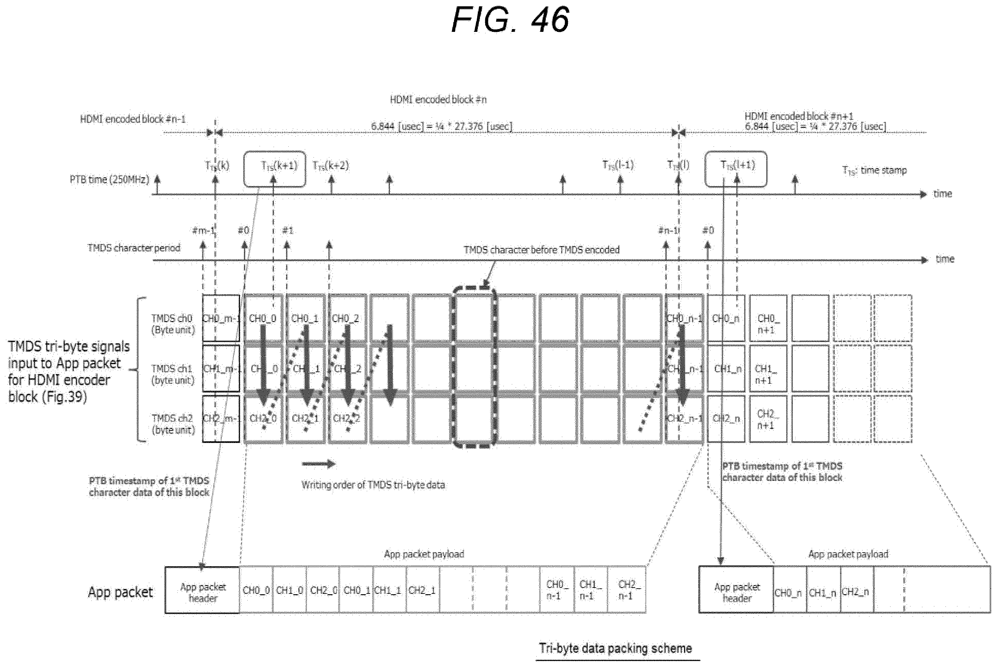

Fig. 46 is a diagram illustrating a transmission timing of a packet including a Try-byte signal. As illustrated in Fig. 46, an App packet for HDMI encoder 31h receives as input, for each TMDS character period, a TMDS character signal that is a 3-byte unit obtained by combining 1-byte signals of the TMDS Ch0, ch1, and ch2. This TMDS character period is asynchronous with ASA TDD signals and protocol signal processing of the ASA.

As illustrated in Fig. 46, similarly to packing of a TMDS/FRL signal, the App packet for HDMI encoder 31h packs an input Tri-byte signal for each period 6.844 [usec] of one-fourth of an ASA TDD cycle (27.376 [usec]).

The packing order is TMDS ch0, TMDS ch1, and TMDS ch2 of Tri-byte data input for each TMDS character period, and after the TMDS ch2, TMDS ch0, TMDS ch1, and TMDS ch2 of Tri-byte data input after the next TMDS character period, and packing is performed in this order.

This processing is repeated until the TMDS ch0, the TMDS ch1, and the TMDS ch2 input to the App packet for HDMI encoder 29h are packed when a period 6.844 [usec] of one-fourth of the ASA TDD cycle has elapsed. Similarly to packing of a TMDS signal or an FRL signal, a reference time at which the first Tri-byte signal is input to the App packet for HDMI encoder 29h is acquired as a timestamp for the header portion of an App packet in which Tri-byte data is stored, and is stored in the App packet header.

The timestamp information is used for reproducing the TMDS character period on the reception side. Specifically, assuming that N is the sum of the number of TMDS character signals included in all App packets transmitted between timestamp information TTS(k+1) stored in the App packet header that transmits Tri-byte at a certain time and timestamp information TTS(l+1) stored in the App packet header that transmits Tri-byte received thereafter, that is, the number of Tri-byte signals, a TMDS character period is obtained by simple calculation indicated in the following Formula (4).

$$\text{TMDS character period} = (TTS(l+1) - TTS(k+1))/N \ \ \ ... \ (4)$$

The relationship among the TMDS character period, a TMDS clock, and a pixel clock frequency of a video stream being transmitted is defined in documents of the HDMI 1.4b and HDMI 2.x standards, and thus, if the TMDS character period can be acquired, a desired TMDS clock or pixel clock can be calculated from the TMDS character period.

Note that although description is given for each TMDS character period in the present description, the speed of the TMDS character period ranges from several 100 MHz to several GHz, and thus the input speed may be reduced by several TMDS character signals being input in parallel and parallel processing being performed.

For example, six bytes of TMDS characters CH0_0, CH1_0, CH2_0, CH0_1, CH1_1, and CH2_1 illustrated in Fig. 46 may be simultaneously input to the App packet for HDMI encoder 29h. Input in units of six bytes is performed for each time of the TMDS character period * 2. Even in such a case, a Tri-byte signal can be packed and transmitted by the procedure described above.

Furthermore, an application packet is divided as illustrated in Fig. 15, stored in a PHY data block of an ASA Down link, and transmitted.

Even in a case where a Tri-byte signal described in Figs. 45 and 46 is transmitted, the entire structure of the Application packet payload format illustrated in Fig. 36 can be used. That is, the Tri-byte signal illustrated in Fig. 46 is stored and transmitted in the region of the TMDS_FRL_data illustrated in Fig. 36.

However, since it is necessary to transmit identification information for transmitting the Tri-byte signal, the TB_TMDS_FRL_control illustrated in Fig. 47 is transmitted instead of the TMDS FRL control of Fig. 41. The TB TMDS FRL control in Fig. 47 indicates, by the TB_TMDS_FRL_mode, whether it is the TMDS type, the FRL type, or a Tri-Byte mode of the TMDS_FRL_data transmitted by the App packet payload.

Furthermore, the TB TMDS FRL control in Fig. 47 transmits the packet size of the TB_TMDS_FRL_data transmitted by the App packet payload and the number of characters of TMDS, FRL, or Tri-byte being transmitted. The reception side correctly decodes the TMDS, FRL, and Tri-byte by the field.

As described above, in the seventh embodiment, even in a case where the HDMI source device 24 transmits a Try-byte signal instead of a TMDS signal or an FML signal, a packet including the Try-byte signal can be generated and transmitted between the SerDes (node2) 22 and the SerDes (node1) 21 for each period obtained by dividing one TDD burst period conforming to the ASA standard into four.

Note that the present technology may have the following configurations.

(1) A communication device including:

an encoder that generates a packet of a time division duplex (TDD) communication method including a high-definition multimedia interface (HDMI) signal; and
a communication unit that transmits the packet to a communication partner device for each of a plurality of division periods obtained by dividing one TDD burst period in the TDD communication method.

(2) The communication device according to (1),
in which the communication unit transmits the packet to a communication partner device for each of the division periods of 6.844 [μs] obtained by dividing the one TDD burst period into four or 3.422 [μs] obtained by dividing the one TDD burst period into eight.

(3) The communication device according to (2),

in which the encoder

generates the packet including a transition minimized differential signaling (TMDS) character in units of 10 bits of a TMDS signal or a fixed rate link (FRL) character in units of 18 bits of an FRL signal

(1) for each division period of 6.844 [μs] obtained by dividing the one TDD burst period of an automotive SerDes alliance (ASA) standard into four in a case where a transmission capacity of the TMDS signal or the FRL signal included in the HDMI signal is 24 [Gbps] or less,
(2) for each division period of 3.422 [μs] obtained by dividing one TDD burst period of the ASA standard into eight in a case where a transmission capacity of the TMDS signal or the FRL signal included in the HDMI signal exceeds 24 [Gbps].

(4) The communication device according to (3),
in which the packet includes information regarding a number of the TMDS character or the FRL character.

(5) The communication device according to any one of (1) to (4),
in which in a case where the HDMI signal includes a display data channel (DDC) signal, the communication unit transmits the packet including the DDC signal to the communication partner device in at least one of the plurality of division periods in the one TDD burst period.

(6) The communication device according to (5),

in which a communication speed of the DDC signal included in the HDMI signal is 400 kbps or higher.

(7) The communication device according to any one of (1) to (4),

in which in a case where the HDMI signal includes a consumer electronics control (CEC) signal, the communication unit transmits the packet including the CEC signal sampled in synchronization with a clock signal shared with the communication partner device to the communication partner device in at least one of the plurality of division periods in the one TDD burst period.

(8) The communication device according to (7), further including

a decoder that decodes a packet including a response signal of the CEC signal transmitted from the communication partner device and returns the response signal to an HDMI device that has transmitted the CEC signal within 0.35 milliseconds after the HDMI device transmits the CEC signal.

(9) The communication device according to any one of (1) to (4),

in which in a case where the HDMI signal includes a +5V signal, the communication unit transmits the packet including the +5V signal to the communication partner device in at least one of the plurality of division periods in the one TDD burst period.

(10) The communication device according to any one of (1) to (4),

in which in a case where the HDMI signal includes an HDMI Ethernet channel (HEC) signal, the communication unit transmits the packet including the HEC signal to the communication partner device in at least one of the division periods that are four or eight in the one TDD burst period.

(11) The communication device according to any one of (1) to (4),

in which in a case where the HDMI signal includes a Try-byte signal, the communication unit transmits the packet including a TMDS character in units of 24 bits of the Try-byte signal to the communication partner device for each of the division periods obtained by dividing the one TDD burst period into four.

(12) The communication device according to (11),

in which in a case where the HDMI signal includes the Try-byte signal, the communication unit transmits information regarding a number of a TMDS character transmitted in a unit time to the communication partner device for each of the division periods obtained by dividing the one TDD burst period into four.

(13) The communication device according to any one of (1) to (12),

in which the encoder generates the packet in which a control signal group including an HPD signal, a DDC signal, and a CEC signal is arranged before a data signal group including a TMDS signal or an FRL signal, and an HEC signal.

(14) The communication device according to (13),

in which the encoder generates the packet in which an error detection code is separately added to each of the control signal group, the TMDS signal or the FRL signal, and the HEC signal.

(15) A communication device including:

a decoder that decodes an HDMI signal included in a first packet received by a TDD communication method from a communication partner device;

an encoder that generates a second packet including a response signal addressed to the communication partner device on a basis of the HDMI signal from the communication partner device; and

a communication unit that transmits the second packet to the communication partner device for each one TDD burst period in a TDD communication method.

(16) The communication device according to (15),

in which the decoder decodes an HDMI signal included in a first packet received by a TDD communication method from the communication partner device, and reproduces a frequency of a TMDS clock or an FML clock on a basis of information regarding a number of a TMDS character or an FRL character per unit time included in the decoded HDMI signal.

(17) The communication device according to (15) or (16),

in which in a case where information regarding a number of a TMDS character per unit time is included in the decoded HDMI signal, the decoder reproduces a TMDS character period.

(18) The communication device according to any one of (15) to (17),

in which in a case where the HDMI signal decoded by the decoder includes a CEC signal, the communication unit transmits the second packet including a response signal to the CEC signal to the communication partner device such that an HDMI device connected to the communication partner device receives the response signal within 0.35 [milliseconds] after the HDMI device transmits the HDMI signal including the CEC signal to the communication partner device.

(19) The communication device according to any one of (15) to (18), further including

a power supply unit that supplies a +5V power signal to a reproduction device of the HDMI signal in a case where the HDMI signal decoded by the decoder includes a +5V signal,
in which the encoder generates the second packet including a hot plug detected (HPD) signal in a case where the HDMI signal decoded by the decoder includes the +5V power signal.

(20) The communication device according to any one of (15) to (19),
in which in a case where the HDMI signal including an audio return channel (ARC) signal is transmitted to the communication partner device, the encoder generates the second packet in which a 4-byte subframe including timeslots 0 to 31 is included, a preamble that transmits timeslots 0 to 3 is converted into a 4-bit specific code, and a timestamp at which the ARC signal is input is input in a timeslot 4.
(21) A communication system including:

a first communication device; and
a second communication device that alternately transmits and receives information to and from the first communication device within a period allocated by a time division duplex (TDD) communication method,
in which the first communication device includes:

an encoder that generates a first packet of the TDD communication method including a high-definition multimedia interface (HDMI) signal; and
a communication unit that transmits the first packet to the second communication device for each of a plurality of division periods obtained by dividing one TDD burst period of a Down link in the TDD communication method, and
the second communication device includes:

a decoder that decodes an HDMI signal included in the first packet received from the first communication device by the TDD communication method;
an encoder that generates a second packet including a response signal addressed to the first communication device on a basis of the HDMI signal from the first communication device; and
a communication unit that transmits the second packet to the first communication device for each one TDD burst period of an Up link in the TDD communication method.

Aspects of the present disclosure are not limited to the above-described individual embodiments, but include various modifications that can be conceived by those skilled in the art, and the effects of the present disclosure are not limited to the above-described contents. That is, various additions, modifications, and partial deletions are possible without departing from the conceptual idea and spirit of the present disclosure derived from the matters defined in the claims and equivalents thereof.

REFERENCE SIGNS LIST

| | |
|---|---|
| 1 | HDMI source device |
| 2 | HDMI sink device |
| 3 | Transmission cable |
| 4 | EDID ROM |
| 11 | Video source |
| 12 | HDMI protocol encoder |
| 13 | TMDS encoder |
| 14 | FRL packet encoder |
| 15 | FRL encoder |
| 16 | Selector |
| 20 | SerDes system |
| 21 | SerDes device |
| 22 | SerDes device |
| 23 | HDMI sink device |
| 24 | HDMI source device (camera module) |
| 28 | App packet decoder |
| 28h | App packet for HDMI decoder |

29    App packet encoder
29h   App packet for HDMI encoder
30    time generator
31    App packet encoder
31h   App packet for HDMI encoder
32    App packet decoder
32h   App packet for HDMI decoder
36    time generator
37    +5V power source

**Claims**

1. A communication device comprising:

   an encoder that generates a packet of a time division duplex (TDD) communication method including a high-definition multimedia interface (HDMI) signal; and
   a communication unit that transmits the packet to a communication partner device for each of a plurality of division periods obtained by dividing one TDD burst period in the TDD communication method.

2. The communication device according to claim 1,
   wherein the communication unit transmits the packet to a communication partner device for each of the division periods of 6.844 [$\mu$s] obtained by dividing the one TDD burst period into four or 3.422 [$\mu$s] obtained by dividing the one TDD burst period into eight.

3. The communication device according to claim 2,

   wherein the encoder
   generates the packet including a transition minimized differential signaling (TMDS) character in units of 10 bits of a TMDS signal or a fixed rate link (FRL) character in units of 18 bits of an FRL signal

   (1) for each division period of 6.844 [$\mu$s] obtained by dividing the one TDD burst period of an automotive SerDes alliance (ASA) standard into four in a case where a transmission capacity of the TMDS signal or the FRL signal included in the HDMI signal is 24 [Gbps] or less,
   (2) for each division period of 3.422 [$\mu$s] obtained by dividing one TDD burst period of the ASA standard into eight in a case where a transmission capacity of the TMDS signal or the FRL signal included in the HDMI signal exceeds 24 [Gbps].

4. The communication device according to claim 3,
   wherein the packet includes information regarding a number of the TMDS character or the FRL character.

5. The communication device according to claim 1,
   wherein in a case where the HDMI signal includes a display data channel (DDC) signal, the communication unit transmits the packet including the DDC signal to the communication partner device in at least one of the plurality of division periods in the one TDD burst period.

6. The communication device according to claim 5,
   wherein a communication speed of the DDC signal included in the HDMI signal is 400 kbps or higher.

7. The communication device according to claim 1,
   wherein in a case where the HDMI signal includes a consumer electronics control (CEC) signal, the communication unit transmits the packet including the CEC signal sampled in synchronization with a clock signal shared with the communication partner device to the communication partner device in at least one of the plurality of division periods in the one TDD burst period.

8. The communication device according to claim 7, further comprising
   a decoder that decodes a packet including a response signal of the CEC signal transmitted from the communication partner device and returns the response signal to an HDMI device that has transmitted the CEC signal within 0.35 milliseconds after the HDMI device transmits the CEC signal.

9. The communication device according to claim 1,
wherein in a case where the HDMI signal includes a +5V signal, the communication unit transmits the packet including the +5V signal to the communication partner device in at least one of the plurality of division periods in the one TDD burst period.

10. The communication device according to claim 1,
wherein in a case where the HDMI signal includes an HDMI Ethernet channel (HEC) signal, the communication unit transmits the packet including the HEC signal to the communication partner device in at least one of the plurality of division periods in the one TDD burst period.

11. The communication device according to claim 1,
wherein in a case where the HDMI signal includes a Try-byte signal, the communication unit transmits the packet including a TMDS character in units of 24 bits of the Try-byte signal to the communication partner device for each of the division periods obtained by dividing the one TDD burst period into four.

12. The communication device according to claim 11,
wherein in a case where the HDMI signal includes the Try-byte signal, the communication unit transmits information regarding a number of a TMDS character transmitted in a unit time to the communication partner device for each of the division periods obtained by dividing the one TDD burst period into four.

13. The communication device according to claim 1,
wherein the encoder generates the packet in which a control signal group including an HPD signal, a DDC signal, and a CEC signal is arranged before a data signal group including a TMDS signal or an FRL signal, and an HEC signal.

14. The communication device according to claim 13,
wherein the encoder generates the packet in which an error detection code is separately added to each of the control signal group, the TMDS signal or the FRL signal, and the HEC signal.

15. A communication device comprising:

a decoder that decodes an HDMI signal included in a first packet received by a TDD communication method from a communication partner device;
an encoder that generates a second packet including a response signal addressed to the communication partner device on a basis of the HDMI signal from the communication partner device; and
a communication unit that transmits the second packet to the communication partner device for each one TDD burst period in a TDD communication method.

16. The communication device according to claim 15,
wherein the decoder decodes an HDMI signal included in a first packet received by a TDD communication method from the communication partner device, and reproduces a frequency of a TMDS clock or an FML clock on a basis of information regarding a number of a TMDS character or an FRL character per unit time included in the decoded HDMI signal.

17. The communication device according to claim 15,
wherein in a case where information regarding a number of a TMDS character per unit time is included in the decoded HDMI signal, the decoder reproduces a TMDS character period.

18. The communication device according to claim 15,
wherein in a case where the HDMI signal decoded by the decoder includes a CEC signal, the communication unit transmits the second packet including a response signal to the CEC signal to the communication partner device such that an HDMI device connected to the communication partner device receives the response signal within 0.35 [milliseconds] after the HDMI device transmits the HDMI signal including the CEC signal to the communication partner device.

19. The communication device according to claim 15, further comprising

a power supply unit that supplies a +5V power signal to a reproduction device of the HDMI signal in a case where the HDMI signal decoded by the decoder includes a +5V signal,

wherein the encoder generates the second packet including a hot plug detected (HPD) signal in a case where the HDMI signal decoded by the decoder includes the +5V power signal.

20. The communication device according to claim 15,
wherein in a case where the HDMI signal including an audio return channel (ARC) signal is transmitted to the communication partner device, the encoder generates the second packet in which a 4-byte subframe including timeslots 0 to 31 is included, a preamble that transmits timeslots 0 to 3 is converted into a 4-bit specific code, and a timestamp at which the ARC signal is input is input in a timeslot 4.

21. A communication system comprising:

a first communication device; and
a second communication device that alternately transmits and receives information to and from the first communication device within a period allocated by a time division duplex (TDD) communication method,
wherein the first communication device includes:

an encoder that generates a first packet of the TDD communication method including a high-definition multimedia interface (HDMI) signal; and
a communication unit that transmits the first packet to the second communication device for each of a plurality of division periods obtained by dividing one TDD burst period of a Down link in the TDD communication method, and
the second communication device includes:

a decoder that decodes an HDMI signal included in the first packet received from the first communication device by the TDD communication method;
an encoder that generates a second packet including a response signal addressed to the first communication device on a basis of the HDMI signal from the first communication device; and
a communication unit that transmits the second packet to the first communication device for each one TDD burst period of an Up link in the TDD communication method.

FIG. 1

EP 4 475 476 A1

## FIG. 2A

TMDS signals (HDMI 1.4b)

FIG. 2B

# FIG. 3

FRL signals

# FIG. 4

FRL data rate per lane

| Rate per Lane | Number of Lanes |
|---|---|
| 3 Gbps | 3 |
| 6 Gbps | 3 |
| 6 Gbps | 4 |
| 8 Gbps | 4 |
| 10 Gbps | 4 |
| 12 Gbps | 4 |

*FIG. 5*

# FIG. 6

CEC signals

# FIG. 7

# FIG. 8

ASA TDD packet structure

EP 4 475 476 A1

# FIG. 9

ASA data rate

| | Down link | Up link |
|---|---|---|
| | DLL payload data rate [Gpbs] | |
| SG1 | 1.8 | 0.05 |
| SG2 | 3.6 | 0.10 |
| SG3 | 6.4 | - |
| SG4 | 9.7 | - |
| SG5 | 13.0 | - |

# FIG. 10

number of PHY data block per TDD cycle

| | Number of PHY data block/TDD cycle |
|---|---|
| SG3 | 36 |
| SG4 | 54 |
| SG5 | 72 |

# FIG. 11

20 : SerDes system

# FIG. 12

TMDS 0/ FRL 0
TMDS 1/ FRL 1
TMDS 2/ FRL 2
TMDS CLK/ FRL 3
DDC (SCL)
DDC (SDA)
CEC
Utility line
HPD
+5V

HDMI Source
24

HDMI cable

Bus — in
out

SerDes (node2)

31h

App packet for HDMI Encoder to Down link

App packet for HDMI Decoder From Up link
32h

DLL (Data Link Layer)
33

34
PHYTx (Down)
x 2 or x 4

35
PHYRx (Up)

Down link
Up link
10

22

SerDes (node1)

25
PHYRx (Down)
x 2 or x 4

26
PHYTx (Up)

DLL (Data Link Layer)
27

28h
App packet for HDMI Decoder From Down link

29h
App packet for HDMI Encoder to Up link

21

TMDS 0/ FRL 0
TMDS 1/ FRL 1
TMDS 2/ FRL 2
TMDS CLK/ FRL 3
DDC (SCL)
DDC (SDA)
CEC
Utility line
HPD
+5V

HDMI cable

HDMI Sink
23

20 : ASA system diagram to transmit HDMI protocol (1)

FIG. 13

20 : ASA system diagram to transmit HDMI protocol (2)

EP 4 475 476 A1

## FIG. 14

HDMI transmission capability with ASA multi-lane

| | | | SG1 | SG2 | SG3 | SG4 | SG5 | SG1 | SG2 | SG3 | SG4 | SG5 | SG1 | SG2 | SG3 | SG4 | SG5 |
|---|---|---|---|---|---|---|---|---|---|---|---|---|---|---|---|---|---|
| | | | 1 lane | | | | | 2 lanes | | | | | 4 lanes | | | | |
| Max total bit rate [Gbps] | | | 1.8 | 3.6 | 6.4 | 9.7 | 13.0 | 3.6 | 7.2 | 12.8 | 19.4 | 26.0 | 7.2 | 14.4 | 25.6 | 38.8 | 52 |
| HDMI 1.4b | TMDS | 10.2 | NA | NA | NA | NA | OK | NA | NA | OK | OK | OK | NA | OK | OK | OK | OK |
| HDMI2.0 | TMDS | 18.0 | NA | NA | NA | NA | NA | NA | NA | NA | OK | OK | NA | NA | OK | OK | OK |
| HDMI2.1 | FRL 3G x 3 | 9.0 | NA | NA | NA | OK | OK | NA | NA | OK | OK | OK | NA | OK | OK | OK | OK |
| | FRL 6G x 3 | 18.0 | NA | NA | NA | NA | NA | NA | NA | NA | OK | OK | NA | NA | OK | OK | OK |
| | FRL 6G x 4 | 24.0 | NA | NA | NA | NA | NA | NA | NA | NA | NA | OK | NA | NA | OK | OK | OK |
| | FRL 8G x 4 | 32.0 | NA | NA | NA | NA | NA | NA | NA | NA | NA | NA | NA | NA | NA | OK | OK |
| | FRL 10G x 4 | 40.0 | NA | NA | NA | NA | NA | NA | NA | NA | NA | NA | NA | NA | NA | NA | OK |
| | FRL 12G x 4 | 48.0 | NA | NA | NA | NA | NA | NA | NA | NA | NA | NA | NA | NA | NA | NA | OK |

FIG. 15

HDMI TMDS_FRL data packing scheme (1)

# FIG. 16

HDMI transmission capability with ASA multi-lane (2)

| | | | SG1 | SG2 | SG3 | SG4 | SG5 | SG1 | SG2 | SG3 | SG4 | SG5 | SG1 | SG2 | SG3 | SG4 | SG5 |
|---|---|---|---|---|---|---|---|---|---|---|---|---|---|---|---|---|---|
| | | | 1 lane | | | | | 2 lanes | | | | | 4 lanes | | | | |
| Max total bit rate [Gbps] | | | 1.8 | 3.6 | 6.4 | 9.7 | 13.0 | 3.6 | 7.2 | 12.8 | 19.4 | 26.0 | 7.2 | 14.4 | 25.6 | 38.8 | 52 |
| HDMI 1.4b | TMDS | 10.2 | NA | NA | NA | NA | OK | NA | NA | OK | OK | OK | NA | DU | OK | OK | OK |
| HDMI2.0 | TMDS | 18.0 | NA | NA | NA | NA | NA | NA | NA | NA | OK | OK | NA | NA | OK | OK | OK |
| HDMI2.1 | FRL 3G x 3 | 9.0 | NA | NA | NA | DU | OK | NA | NA | OK | OK | OK | NA | DU | OK | OK | OK |
| | FRL 6G x 3 | 18.0 | NA | NA | NA | NA | NA | NA | NA | NA | OK | OK | NA | NA | OK | OK | OK |
| | FRL 6G x 4 | 24.0 | NA | NA | NA | NA | NA | NA | NA | NA | NA | OK | NA | NA | OK | OK | OK |
| | FRL 8G x 4 | 32.0 | NA | NA | NA | NA | NA | NA | NA | NA | NA | NA | NA | NA | NA | OK | OK |
| | FRL 10G x 4 | 40.0 | NA | NA | NA | NA | NA | NA | NA | NA | NA | NA | NA | NA | NA | NA | OK |
| | FRL 12G x 4 | 48.0 | NA | NA | NA | NA | NA | NA | NA | NA | NA | NA | NA | NA | NA | NA | OK |

NA: not available, DU : don't use

EP 4 475 476 A1

# FIG. 17

total number of PHY data block of ASA

| | | total number of PHY data block | | |
|---|---|---|---|---|
| | | 1 | 2 | 4 |
| SG1 | 10 | 10 | 20 | 40 |
| SG2 | 20 | 20 | 40 | 80 |
| SG3 | 36 | 36 | 72 | 144 |
| SG4 | 54 | 54 | 108 | 216 |
| SG5 | 72 | 72 | 144 | 288 |

# FIG. 18

EP 4 475 476 A1

HDMI TMDS_FRL data packing scheme (2)

# FIG. 19

The last data packing patterns of which the transmitting TMDS/FRL character data size is not multiple of 4.

HDMI TMDS_FRL data packing scheme (3)

FIG. 20

HDMI TMDS_FRL data packing scheme (4)

## FIG. 21

FRL 3 lane mode

Byte packing & order

HDMI TMDS_FRL data packing scheme (5)

# FIG. 22

The last data packing patterns of which the transmitting TMDS/FRL character data size is not multiple of 4.

HDMI TMDS_FRL data packing scheme (6)

EP 4 475 476 A1

# FIG. 23

FRL 4 lane mode

HDMI TMDS_FRL data packing scheme (7)

# FIG. 24

The last data packing patterns of which the transmitting TMDS/FRL character data size is not multiple of 4.

HDMI TMDS_FRL data packing scheme (8)

# FIG. 25

HDMI TMDS_FRL data packing scheme (9)

EP 4 475 476 A1

*FIG. 26*

HDMI Sink — 23

ASA SerDes (node1) — 21

DDC (SCL)
DDC (SDA)

Down link
Uplink
10

ASA SerDes (node2) — 22

DDC (SCL)
DDC (SDA)

HDMI Source — 24

DDC connection diagram

# FIG. 27

DDC packet structure

| byte# | bit | function |
|-------|-----|----------|
| 1 | 7 | reserved |
|   | 6 | I2C error |
|   | 5 | reserved |
|   | 4 | I2C data flag |
|   | 3 | I2C Nack |
|   | 2 | I2C ACK |
|   | 1 | I2C Stop |
|   | 0 | I2C Start/Restart |
| 2 | 7:0 | I2C data |

# FIG. 28

SDA (400 kbps)
HDMI Source btw
ASA SerDes (node2)

100kbps period

Clock stretch period by ASA SerDes (node 1)

8 bit data (n)

8 bit data (n+1)

8 bit data (n+2)

PDB=PHY data block
(see Fig11)

Packetized
DDC data conveyed
in PDB GP#2

Maximum encoding delay is
equal to ¼ TDD cycle

1 bit ACK

1 bit ACK

Latency by decoding
Packet for App Packet

ASA TDD

| PDB Gp#1 | PDB Gp#2 | PDB Gp#3 | PDB Gp#4 |

Up link

Down link

1TDD cycle 27.376 [usec]

Latency by decoding
Packet for App Packet

SDA (400 kbps)
ASA SerDes (node1) btw
HDMI Sink

8 bit data (n)

1 bit ACK from HDMI Sink

8 bit data (n+1)

1 bit ACK from HDMI Sink

DDC transmission flow

EP 4 475 476 A1

# FIG. 29

CEC connection diagram

# FIG. 30

CEC packet

| Byte | bit | Name |
|------|-----|------|
| 1 | 7 | Num of CEC data |
| | 6:4 | reserved |
| | 3 | CEC[0] |
| | 2 | CEC[1] |
| | 1 | CEC[2] |
| | 0 | CEC[3] |
| 1+n | 7 | CEC[8*(n-1)+4] |
| | 6 | CEC[8*(n-1)+5] |
| | 5 | CEC[8*(n-1)+6] |
| | 4 | CEC[8*(n-1)+7] |
| | 3 | CEC[8*(n-1)+8] |
| | 3 | CEC[8*(n-1)+9] |
| | 1 | CEC[8*(n-1)+10] |
| | 0 | CEC[8*(n-1)+11] |

n=1,2,3

## CEC packet structure

# FIG. 31

*FIG. 32*

HDMI Sink — 23

TMDS 0/ FRL 0
TMDS 1/ FRL 1
TMDS 2/ FRL 2
TMDS CLK/ FRL 3

DDC (SCL)
DDC (SDA)
CEC
Utility line
HPD
+5V

HDMI cable

+5V power source — 37

+5V signal

App packet for HDMI Decoder From Down link — 28h

App packet for HDMI Decoder to UP link — 29h

DLL (Data Link Layer) — 27

PHYRx (Down) — 25

x 2 or x 4

PHYTx (Up) — 26

SerDes (node1) — 21

Down link

Up link

ASA SerDes to connect HDMI Sink

# FIG. 33

Audio sampling data @ stereo linier audio data

Frame rate is same as audio sampling rate, if the linear audio sampling data is transmitted.

| X | | Y | | Z | | Y | | X | | Y | | X |
|---|---|---|---|---|---|---|---|---|---|---|---|---|
| M | Channel 1 | W | Channel 2 | B | Channel 1 | W | Channel 2 | M | Channel 1 | W | Channel 2 | M |

Sub-frame ← → Sub-frame

Frame 191          Frame 0          Frame 1

Start of block

## IEC 60958 frame format

| | 0 | 3 | 4 | 7 | 8 | | 27 | 28 | | | 31 |
|---|---|---|---|---|---|---|---|---|---|---|---|

| Sync preamble | Aux | L S B | Audio sample word | M S B | V | U | C | P |

Validity flag
User data
Channel status
Parity bit

## IEC 60958 Sub-frame format

EP 4 475 476 A1

56

| Preceding state | 0 | 1 | |
|---|---|---|---|
| Preamble code | Channel coding | | |
| "B" or "Z" (see note to 4.1.2) | 11101000 | 00010111 | Sub-frame 1 and the start of the block |
| "M" or "X" | 11100010 | 00011101 | Sub-frame 1 |
| "W" or "Y" | 11100100 | 00011011 | Sub-frame 2 |

Sync preamble pattern

## IEC 60958 format

# FIG. 34

ARC (IEC 60958) data transmission flow

EP 4 475 476 A1

# FIG. 35

ARC data (IEC 6-0958 sub frame) packet

| Byte | bit | Name | Description |
|---|---|---|---|
| 1 | 7:4 | auxiliary sample bit [3:0] | this field conveys 4 bits in the time slots 4 to 7 of IEC 60958 SubFrame. These 4 bits are designated auxiliary sample bits.<br>If audio sample word is 24 bit, this aux bit is assinged as lowest 4 bist of audio sample word. |
| | 3:0 | sync preamble [3:0] | 4'b0000 if preamble code is B (or Z)<br>4'b1111 if preamble code is M( or X)<br>4'b1110 if preamble code is W(or Y) |
| 2 | 7:0 | Audio sample word  [7:0] | Audio sample word of sub frame. Audio sample word is conveyed in time slot 8 to 27 of sub frame. The LSB of audio sample word in time slot 8 is conveyed as Audio sample word [0] of this field. |
| 3 | 7:0 | Audio sample word [15:8] | |
| 4 | 7 | parity bit | parity bit is conveyed in time slot 31 of sub frame. |
| | 6 | Channel status | channel status bit is conveyed in time slot 30 of sub frame. |
| | 5 | user data | user data is conveyed in time slot 29 of sub frame. |
| | 4 | validity flag | validity flag is conveyed in time slot 28 of sub frame. |
| | 3:0 | Audio sample word [19:16] | Audio sample word of sub frame. Audio sample word is conveyed in time slot 8 to 27 of sub frame. The MSB of audio sample word in time slot 27 is conveyed as Audio sample word [19] of this field. |

EP 4 475 476 A1

# FIG. 36

App packet payload format for HDMI (Source to Sink) via Down link

EP 4 475 476 A1

# FIG. 37

App packet payload format for HDMI (Sink to Source) via Up link

## FIG. 38

HDMI Header

| Byte | bit | Name | Description |
|---|---|---|---|
| 1 | 7 | Signal Direction | 1: Signal direction is from Source to Sink. HDMI packet can transmit TMDS/FRL data.<br>0: Signal direction is from Sink to Source. HDMI packet can not transmit TMDS/FRL data. |
| | 6 | +5V_HPD | This signal transmit the +5V if the Signal direction is set to 1.<br>This signal transmit the HPDif the Signal direction is set to 0. |
| | 5 | TMDS_FRL_packets | 1: the following packets transmit the TMDS_FRL_data packets<br>0: the following packets do NOT transmit the TMDS_FRL_data packets.<br>This field must be set to 0, If Signal Directions is set to 0. |
| | 4 | CEC_Valid | 1: the following CEC packet is valid.<br>0: the following CEC packet is not valid. It means CEC signal level is kept previous one. |
| | 3 | DDC valid | 1: the following DDC packet is valid.<br>0: the following DDC packet is not valid. It means DDC signal level is kept previous one. |
| | 2 | HEC valid | 1:HEC packet is transmitted.<br>0:There is NO HEC packet. |
| | 1 | ARC valid | 1:ARC packet is transmitted.<br>0:There is NO ARC packet. This field must be set to 0, if Signal Direction is set to 1. |
| | 0 | reserved | reserved. (For HEC or ARC ) |

Header of App packet payload format for HDMI

EP 4 475 476 A1

# FIG. 39

EP 4 475 476 A1

DDC packet

| Byte | bit | Name | Description |
|---|---|---|---|
| 2 | 7:6 | reserved | |
| | 5 | DDC_I2C Error | 1: I2C bus hangup 0:no error |
| | 4 | DDC_I2C Data_Addr_indicator | 1: Data detected (payload byte follows) 0: not detected (no payload byte) |
| | 3 | DDC_I2C Nack | 1: Nack detected  0: not detected |
| | 2 | DDC_I2C ACK | 1: Ack detected 0: not detected |
| | 1 | DDC_I2C Stop | 1: Stop detected 0: not detected |
| | 0 | DDC_I2C Start/Restart | 1: Start/Restart detected 0: not detected |
| 3 | 7:0 | DDC_data | slave address, offset address, wdata or rdata |

DDC packet format of App packet payload format for HDMI

# FIG. 40

CEC packet

| Byte | bit | Name | Description |
|---|---|---|---|
| 4 | 7 | Num of CEC data | number of the sampled CEC data in a certain TDD period to transmit.<br>1:28 data<br>0:27 data |
| | 6:4 | reserved | |
| | 3 | CEC[0] | |
| | 2 | CEC[1] | |
| | 1 | CEC[2] | |
| | 0 | CEC[3] | |
| 4+n | 7 | CEC[8*(n-1)+4] | CEC sampled data of 1 TDD cycle. Sampling rate is 1 MHz.The total number of sampled CEC data in a certain TDD cycel is 27 or 28 samples.CEC[0] is the first data and CEC[26] or CEC[27] is the last data of this data block. |
| | 6 | CEC[8*(n-1)+5] | |
| | 5 | CEC[8*(n-1)+6] | |
| | 4 | CEC[8*(n-1)+7] | |
| | 3 | CEC[8*(n-1)+8] | |
| | 3 | CEC[8*(n-1)+9] | |
| | 1 | CEC[8*(n-1)+10] | |
| | 0 | CEC[8*(n-1)+11] | |

n=1,2,3

<u>CEC packet format of App packet payload format for HDMI</u>

# FIG. 41

TMDS_FRL_control

| Byte | bit | Name | Description |
|------|-----|------|-------------|
| 8 | 7:4 | reserved | |
| | 3:0 | TMDS_FRL_mode[3:0] | 0000: TMDS_1 ( TMDS clock rate = 1 x TMDS character)<br>0001: TMDS_2 ( TMDS clock rate = 0.25 x TMDS character)<br>0010:FRL3lane_3G<br>0011:FRL3lane_6G<br>0100:FRL4lane_6G<br>0101:FRL4lane_8G<br>0110:FRL4ane_10G<br>0111:FRL4ane_12G<br>else: reserved |
| 9 | 7:0 | TMDS_FRL_packet_size[15:8] | Number of TMDS_FRL data payload sise of this packet. Byte unit. |
| 10 | 7:0 | TMDS_FRL_packet_size[7:0] | |
| 11 | 7:6 | reserved | |
| | 5:0 | number of TMDS_FRL_character[13:8] | Number of TMDS_FRL characters are trasmitted in this packet. If HDMI is TMDS mode, a character is 10 bit. If HDMI is FRL mode, a charcter is 18 bit. |
| 12 | 7:0 | number of TMDS_FRL_character[7:0] | |

TMDS_FRL_control

EP 4 475 476 A1

## FIG. 42

HEC control packet

| Byte | bit | Name | Description |
|---|---|---|---|
| 13(8) | 7 | reserved | |
| | 6:0 | packet_length[14:8] | Total length of payload in bytes |
| 14(9) | 7:0 | packet_length[7:0] | |

HEC_control

# FIG. 43

ARC control packet

| Byte | bit | Name | Description |
|---|---|---|---|
| 10 | 7 | reserved | |
| | 6 | valiable bit control enable | 1: enable to set the validity flag (V) of subframe if CEC32 calculation result shows error. |
| | 5:0 | number of SubFrame | the number of subFrame conveyed in following packet. (maximum sampling rate of audio data is 192kbps due to the maximum number of this field.) |

ARC_control

## FIG. 44

TMDS character period

time

TMDS ch0 D[7:0]

TMDS ch1 D[7:0]

TMDS ch2 D[7:0]

Try-byte data : active video data, video blanking period data ( control period Data, island period data)

Tri-byte data

EP 4 475 476 A1

# FIG. 45

ASA system diagram to transmit HDMI protocol (3)

# FIG. 46

Tri-byte data packing scheme

# FIG. 47

TB_TMDS_FRL_control

| Byte | bit | Name | Description |
|---|---|---|---|
| | 7:4 | reserved | |
| 8 | 3:0 | TB_TMDS_FRL_mode[3:0] | 0000: TMDS_1 ( TMDS clock rate = 1 x TMDS character)<br>0001: TMDS_2 ( TMDS clock rate = 0.25 x TMDS character)<br>0010:FRL3lane_3G<br>0011:FRL3lane_6G<br>0100:FRL4lane_6G<br>0101:FRL4lane_8G<br>0110:FRL4ane_10G<br>0111:FRL4ane_12G<br>1000:Tri-Byte mode<br>else: reserved |
| 9 | 7:0 | TB_TMDS_FRL_packet_size[15:8] | Number of TB_TMDS_FRL data payload sise of this packet. Byte unit. |
| 10 | 7:0 | TB_TMDS_FRL_packet_size[7:0] | |
| 11 | 7:6 | reserved | |
| | 5:0 | number of TB_TMDS_FRL_character[13:8] | Number of TB_TMDS_FRL characters are trasmitted in this packet. If HDMI is TMDS mode, a character is 10 bit. If HDMI is FRL mode, a charcter is 18 bit. If HDMI is Tri-byte mode, a character is 24bit (3byte) |
| 12 | 7:0 | number of TB_TMDS_FRL_character[7:0] | |

TB_TMDS_FRL_control

## INTERNATIONAL SEARCH REPORT

International application No.

**PCT/JP2023/003566**

### A. CLASSIFICATION OF SUBJECT MATTER

*H04L 5/16*(2006.01)i
FI:   H04L5/16

According to International Patent Classification (IPC) or to both national classification and IPC

### B. FIELDS SEARCHED

Minimum documentation searched (classification system followed by classification symbols)

H04L5/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

IEEE Xplore

### C. DOCUMENTS CONSIDERED TO BE RELEVANT

| Category* | Citation of document, with indication, where appropriate, of the relevant passages | Relevant to claim No. |
|---|---|---|
| A | JP 2008-515343 A (FINISAR CORP.) 08 May 2008 (2008-05-08) paragraphs [0010]-[0017], [0034]-[0037], fig. 2, 5 | 1-21 |
| A | WO 2017/085968 A1 (SONY CORP.) 26 May 2017 (2017-05-26) paragraphs [0002]-[0005], [0020]-[0029], fig. 1-2 | 1-21 |
| A | DALMIA, Kamal. ASA MotionLink - Tutorial [online]. ASA Publications. 29 September 2021, pages 1-16, [retrieved on 29 March 2023], Internet <URL: https://auto-serdes.org/wp-content/uploads/2022/08/ASA-tutorial-Sep-2021.pdf> page 5 | 1-21 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 March 2023** | **18 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

<table>
<tr><td colspan="2" align="center">INTERNATIONAL SEARCH REPORT<br>Information on patent family members</td><td colspan="2">International application No.<br><br><b>PCT/JP2023/003566</b></td></tr>
</table>

| Patent document<br>cited in search report | Publication date<br>(day/month/year) | Patent family member(s) | Publication date<br>(day/month/year) |
|---|---|---|---|
| JP 2008-515343 A | 08 May 2008 | US 2006/0067690 A1<br>paragraphs [0013]-[0020],<br>[0053]-[0056], fig. 2, 5<br>US 2006/0077778 A1<br>WO 2006/039146 A2 | |
| WO 2017/085968 A1 | 26 May 2017 | US 2018/0249121 A1<br>paragraphs [0003]-[0006],<br>[0027]-[0039], fig. 1-2 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011239011 A